# EUROPÄISCHE PATENTSCHRIFT

(11) **EP 3 552 771 B1**
(45) Veröffentlichungstag und Bekanntmachung des Hinweises auf die Patenterteilung: **05.04.2023**
(21) Anmeldenummer: 19152426.3
(22) Anmeldetag: 18.01.2019
(51) Int. Cl.: B25H 3/04, B25H 3/00

(54) **WERKZEUGEINSATZ UND/ODER WERKZEUGAUFNAHMEEINSATZ, WERKZEUGEINSATZ- UND/ODER WERKZEUGAUFNAHMEEINSATZSYSTEM UND WERKZEUG- UND/ODER WERKZEUGAUFNAHMELAGERSYSTEM**
TOOL INSERT AND/OR TOOL HOLDER INSERT, TOOL INSERT AND/OR TOOL HOLDER INSERT SYSTEM AND TOOL AND/OR TOOL HOLDER STORAGE SYSTEM
INSERT D'OUTIL ET / OU INSERT LOGEMENT D'OUTIL, SYSTÈME D'INSERT D'OUTIL ET / OU D'INSERT LOGEMENT D'OUTIL ET SYSTÈME DE STOCKAGE D'OUTIL ET / OU DE LOGEMENT D'OUTIL

(30) Priorität: 25.01.2018 DE 202018100425 U
(43) Veröffentlichungstag der Anmeldung: 16.10.2019
(73) Patentinhaber: E. Zoller GmbH & Co. KG Einstell- und Messgeräte, 74385 Pleidelsheim (DE)
(72) Erfinder: Pfau, Christian, 74379 Ingersheim (DE); Zoller, Alexander, 74385 Pleidelsheim (DE)
(74) Vertreter: Daub, Thomas

(56) Entgegenhaltungen:
- EP-A1- 1 547 725
- EP-A2- 0 152 374
- WO-A1-00/66330
- DE-A1- 2 619 151
- DE-U1- 8 716 734
- DE-U1-202013 105 024
- US-A- 4 410 095
- US-A- 4 535 897
- US-A- 4 770 297
- US-A- 5 050 756
- US-A- 6 047 827

## Beschreibung

### Stand der Technik

Die Erfindung betrifft einen Werkzeugeinsatz und/oder Werkzeugaufnahmeeinsatz nach dem Oberbegriff des Anspruchs 1, ein System von Werkzeugeinsätzen und/oder Werkzeugaufnahmeeinsätzen nach dem Oberbegriff des Anspruchs 12 und ein Werkzeug- und/oder Werkzeugaufnahmelagersystem nach dem Oberbegriff des Anspruchs 13.

Aus den Dokumenten US 4,410,095 A, US 4,770,297 A, US 4,535,897 A, US 6,047,827 A, US 5,050,756 A, DE 87 16 734 U1, DE 26 19 151 A1, DE 20 2013 105 024 U1, WO 00/66330 A1, EP 0 152 374 A2 und EP 1 547 725 A1 sind bereits Werkzeugeinsätze oder Werkzeugaufnahmeeinsätze mit zumindest einem Grundkörper, aufweisend zumindest einen Aufnahmebereich zu einer zumindest teilweisen Aufnahme zumindest eines Werkzeugs und/oder zumindest einer Werkzeugaufnahme und mit zumindest einem, zumindest teilweise innerhalb des Aufnahmebereichs angeordneten Kontaktelement zu einer Ausbildung einer kontaktierenden Halterung des Werkzeugs und/oder der Werkzeugaufnahme bekannt.

Das Dokument US 4,770,297 A offenbart einen Werkzeugeinsatz und/ oder Werkzeugaufnahmeeinsatz gemäß dem Oberbegriff des Anspruchs 1.

Die Aufgabe der Erfindung besteht insbesondere darin, eine gattungsgemäße Vorrichtung mit vorteilhaften Lagereigenschaften zur Lagerung von Werkzeugen und/oder Werkzeugaufnahmen bereitzustellen. Die Aufgabe wird erfindungsgemäß durch die Merkmale der Ansprüche 1, 12 und 13 gelöst, während vorteilhafte Ausgestaltungen und Weiterbildungen der Erfindung den Unteransprüchen entnommen werden können.

### Vorteile der Erfindung

Die Erfindung geht aus von einem Werkzeugeinsatz und/oder Werkzeugaufnahmeeinsatz, insbesondere Werkzeugablageeinsatz und/oder Werkzeugaufnahmeablageeinsatz, mit zumindest einem Grundkörper, aufweisend einen, zumindest teilweise als eine Vertiefung in dem Grundkörper ausgebildeten, Aufnahmebereich zu einer zumindest teilweisen Aufnahme zumindest eines Werkzeugs und/oder zumindest einer Werkzeugaufnahme und mit zumindest einem, zumindest teilweise innerhalb des Aufnahmebereichs angeordneten, insbesondere in den Aufnahmebereich hineinragenden, Kontaktelement zu einer Ausbildung einer kontaktierenden Halterung des Werkzeugs und/oder der Werkzeugaufnahme.

Es wird vorgeschlagen, dass der Werkzeugeinsatz und/oder Werkzeugaufnahmeeinsatz, insbesondere Werkzeugablageeinsatz und/oder Werkzeugaufnahmeablageeinsatz, komplementär zueinander ausgebildete, parallel zu einer Aufnahmerichtung des Aufnahmebereichs verlaufende, Seitenwände an zumindest zwei gegenüberliegenden Außenseiten des Grundkörpers aufweist, welche dazu vorgesehen sind, zumindest teilweise mit Seitenwänden weiterer Werkzeugeinsätze und/oder Werkzeugaufnahmeeinsätze ineinanderzugreifen.

Insbesondere können dadurch vorteilhafte Lagereigenschaften zur Lagerung von Werkzeugen, insbesondere bis zu einem sinnvollen Schneidendurchmesser und/oder Abstand, und/oder Werkzeugaufnahmen geschaffen werden. Beispielsweise könnte der Werkzeugeinsatz und/oder Werkzeugaufnahmeeinsatz vorteilhaft zur Lagerung von Werkzeugen mit einem Schneidendurchmesser von zumindest bis zu 70 mm vorgesehen sein. Vorteilhaft kann eine hohe Packungsdichte bei einer Lagerung von Werkzeugen und/oder Werkzeugaufnahmen erreicht werden, insbesondere indem durch eine geeignete Anordnung von Werkzeugeinsätzen und/oder Werkzeugaufnahmeeinsätzen zueinander eine verfügbare Lageroberfläche möglichst effektiv genutzt werden kann, insbesondere bei einer linearen Anordnung von Werkzeugen und Lagerbasen, beispielsweise Montagerahmen. Vorteilhaft kann dabei eine Zahl von Werkzeugeinsätzen und/oder Werkzeugaufnahmeeinsätzen pro verfügbarer Lagerfläche optimiert und/oder maximiert werden, wodurch insbesondere eine benötigte Lagerfläche und damit verbundene Lagerkosten reduziert werden können.

Unter einer "Werkzeugaufnahme" soll insbesondere ein Bauteil verstanden werden, welches zu einer Aufnahme eines Werkzeugs und einer Verbindung des Werkzeugs mit einer Maschine vorgesehen ist. Insbesondere ist die Werkzeugaufnahme als eine Schnittstelle zwischen Werkzeug und Maschine ausgebildet. Vorzugsweise ist die Werkzeugaufnahme als ein Werkzeugfutter ausgebildet. Unter einem "Werkzeugeinsatz", bzw. einem "Werkzeugaufnahmeeinsatz" soll insbesondere eine Vorrichtung verstanden werden, welche dazu vorgesehen ist, zumindest ein Werkzeug, bzw. eine Werkzeugaufnahme orts- und/oder positionsfest zu haltern. Zur Halterung des Werkzeugs und/oder der Werkzeugaufnahme dienen insbesondere Abstützflächen, welche insbesondere zumindest teilweise an eine Außenform eines zu halternden Gegenstands angepasst sein können, interne Anpresskräfte, beispielsweise durch plastische Verformung eines Teils des Werkzeugeinsatzes und/oder des Werkzeugaufnahmeeinsatzes durch den eingelagerten Gegenstand und/oder Reibungskräfte zwischen zumindest einer Oberfläche des Werkzeugeinsatzes und/oder des Werkzeugaufnahmeeinsatzes und zumindest einer Oberfläche des eingelagerten Gegenstands. Insbesondere erfolgt die Halterung frei von externen Befestigungsmaßnahmen wie beispielsweise anbinden, ansaugen, ankleben, externes anpressen o.ä. Insbesondere wird zu einer Einlagerung das Werkzeug bzw. die Werkzeugaufnahme in den Aufnahmebereich des Werkzeugeinsatzes, bzw. des Werkzeugaufnahmeeinsatzes abgelegt oder abgestellt und zu einer Auslagerung wird das Werkzeug bzw. die Werkzeugaufnahme aus dem Aufnahmebereich des Werkzeugeinsatzes, bzw. des Werkzeugaufnahmeeinsatzes mittels einfachen Anhebens entnommen.

Unter einer "Vertiefung in dem Grundkörper" soll insbesondere eine Ausnehmung in dem Grundkörper verstanden werden, welche einen Freiraum für eine Aufnahme zumindest eines Teils eines Körpers des Werkzeugs und/oder der Werkzeugaufnahme ausbildet. Unter einem "Kontaktelement" soll insbesondere ein Teil des Werkzeugeinsatzes bzw. des Werkzeugaufnahmeeinsatzes verstanden werden, welcher das Werkzeug und/oder die Werkzeugaufnahme während der Lagerung kontaktiert. Vorzugsweise weist der Werkzeugeinsatz und/oder Werkzeugaufnahmeeinsatz eine Mehrzahl an, insbesondere symmetrisch zueinander angeordneten, Kontaktelementen auf. Die Kontaktelemente können einstückig mit dem Grundkörper und/oder von dem Grundkörper trennbar ausgebildet sein. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren. Darunter, dass das Kontaktelement "zumindest teilweise innerhalb des Aufnahmebereichs" angeordnet ist, soll insbesondere verstanden werden, dass zumindest 15 %, vorzugsweise zumindest 35 %, vorteilhaft zumindest 60 %, bevorzugt zumindest 85 % und besonders bevorzugt 100 % des Kontaktelements innerhalb einem durch den Aufnahmebereich definierten Raum des Grundkörpers angeordnet ist. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Darunter, dass zwei Seitenwände "komplementär zueinander ausgebildet" sind soll insbesondere verstanden werden, dass die Seitenwände, insbesondere Oberflächen der Seitenwände, Formen, insbesondere Außenformen, aufweisen, welche gegensätzlich zueinander ausgebildet und/oder geformt sind, wobei sich vorzugsweise die Formen, insbesondere Außenformen, der Seitenwände, insbesondere der Oberflächen der Seitenwände, insbesondere bei einem "in-Kontakt-bringen", gegenseitig ergänzen. Insbesondere greifen zwei zueinander komplementäre Seitenwände bei einem Kontakt puzzleteilgleich ineinander ein. Die "Aufnahmerichtung" ist insbesondere als eine Richtung ausgebildet, welche parallel zu einer Hauptbewegungsrichtung eines Werkzeugs und/oder einer Werkzeugaufnahme bei einer Einlagerung in den Werkzeugeinsatz und/oder den Werkzeugaufnahmeeinsatz verläuft. Insbesondere ist in einem einlagerbereiten Zustand die Aufnahmerichtung zumindest im Wesentlichen parallel zu der Vertikalen ausgerichtet. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Unter einer "Seitenwand" des Werkzeugeinsatzes und/oder Werkzeugaufnahmeeinsatzes soll insbesondere eine seitliche Begrenzung des Grundkörpers des Werkzeugeinsatzes und/oder Werkzeugaufnahmeeinsatzes verstanden werden, welche zumindest überwiegend seitlich von dem Aufnahmebereich angeordnet ist. Erfindungsgemäß ist die Seitenwand zumindest im Wesentlichen parallel zu der Aufnahmerichtung und/oder in dem einlagerbereiten Zustand zu der Vertikalen. Unter einem "einlagerbereiten Zustand" soll insbesondere ein Zustand des Werkzeugeinsatzes und/oder Werkzeugaufnahmeeinsatzes verstanden werden, welcher dazu vorgesehen ist, Werkzeuge sicher, insbesondere geschützt vor Verkippen und/oder Verrutschen, zu haltern.

Unter einem "Ineinandergreifen" soll insbesondere ein Kontaktieren zweier Teile und/oder Flächen verstanden werden, bei dem sich ein Teil und/oder eine Fläche in das andere Teil und/oder die andere Fläche fügt. Erfindungsgemäß überlappen bei einem Ineinandergreifen der Seitenwände zweier Werkzeugeinsätze und/oder zweier Werkzeugaufnahmeeinsätze, gedachte, kleinstmögliche geometrische Quader, welche den jeweiligen Werkzeugeinsatz und/oder Werkzeugaufnahmeeinsatz, gerade noch vollständig umschließen, zumindest teilweise.

Erfindungsgemäß verlaufen Seitenflächen, insbesondere Kontaktflächen, einer Seitenwand der komplementär zueinander ausgebildeten Seitenwände auf wenigstens zwei voneinander wesentlich verschiedenen Ebenen. Dadurch kann insbesondere eine vorteilhafte Geometrie des Werkzeugeinsatzes und/oder Werkzeugaufnahmeeinsatzes erreicht werden, womit insbesondere eine mögliche Packungsdichte weiter erhöht werden kann. Unter "voneinander wesentlich verschieden" soll insbesondere zumindest mit einem Winkel größer 5°, vorzugsweise größer 10° und bevorzugt größer 30° zueinander angewinkelt verlaufend oder parallel verlaufend und voneinander wenigstens 3 mm, vorzugsweise wenigstens 5 mm, bevorzugt wenigstens 1 cm und besonders bevorzugt wenigstens 2 cm beabstandet verstanden werden.

Erfindungsgemäß verlaufen zumindest zwei der durch die Seitenflächen, insbesondere Kontaktflächen, einer Seitenwand der komplementär zueinander ausgebildeten Seitenwände definierten Ebenen zumindest im Wesentlichen parallel zueinander. Dadurch kann insbesondere eine vorteilhafte Geometrie des Werkzeugeinsatzes und/oder Werkzeugaufnahmeeinsatzes erreicht werden, womit insbesondere eine mögliche Packungsdichte weiter erhöht werden kann. Außerdem wird vorgeschlagen, dass der Grundkörper in einer Draufsicht zumindest im Wesentlichen eine Schaufelform, eine Spachtelform und/oder eine Form eines oben geschlossenen Ypsilons ausbildet. Dadurch kann insbesondere eine vorteilhafte Geometrie des Werkzeugeinsatzes und/oder Werkzeugaufnahmeeinsatzes erreicht werden, womit insbesondere eine mögliche Packungsdichte weiter erhöht werden kann. Unter einer "Schaufelform" soll insbesondere eine Außenform verstanden werden, welche zumindest im Wesentlichen aus einem ersten Rechteck und einem zweiten Rechteck besteht. Das erste Rechteck weist hierbei insbesondere zumindest im Wesentlichen gleich lange Seitenflächen auf. Das zweite Rechteck ist insbesondere als ein längliches Rechteck ausgebildet. Das zweite Rechteck ist insbesondere bei der Schaufelform mit einer kurzen Seite zumindest im Wesentlichen mittig an einer Seite des ersten Rechtecks angeordnet. Unter einer "Spachtelform" soll insbesondere eine Außenform verstanden werden, welche zumindest im Wesentlichen aus einem zumindest im Wesentlichen gleichschenkligen Trapez und einem länglichen Rechteck besteht. Das längliche Rechteck ist insbesondere bei der Spachtelform mit einer kurzen Seite zumindest im Wesentlichen mittig an einer kürzeren Grundseite des Trapezes angeordnet. Unter einer "Form eines oben geschlossenen Ypsilons" soll insbesondere eine Außenform verstanden werden, welche zumindest im Wesentlichen aus einem Sechseck, einem länglichen Rechteck, besteht. Das Sechseck weist hierbei insbesondere eine Form auf, welche einem Rechteck entspricht, von welchem zwei benachbarte Ecken gleichmäßig und in gleicher Größe abgeschnitten wurden. Das längliche Rechteck ist insbesondere bei der Form eines oben geschlossenen Ypsilons mittig an der Seite des Sechsecks, welche zwischen den "abgeschnittenen Ecken" liegt angeordnet. Vorzugsweise entspricht die kurze Seite des länglichen Rechtecks hierbei zumindest im Wesentlichen der Länge der Seite des Sechsecks zwischen den "abgeschnittenen Ecken".

Des Weiteren wird vorgeschlagen, dass der Grundkörper an zumindest einer weiteren Seitenwand, vorzugsweise an zumindest zwei weiteren, gegenüberliegenden Seitenwänden, zumindest ein Montageelement zu einer Montage an einer externen Baueinheit, insbesondere einer parallel zu der weiteren Seitenwand verlaufenden Montageschiene einer externen Baueinheit, aufweist. Dadurch kann vorteilhaft eine Ausrichtung und/oder Montage des Werkzeugeinsatzes und/oder Werkzeugaufnahmeeinsatzes vereinfacht werden. Vorteilhaft kann das Montageelement universell einsetzbar ausgebildet sein, beispielweise indem es mit bereits bestehenden Systemen von Montagerahmen kompatibel ausgebildet ist. Insbesondere könnte das Montageelement kompatibel mit einem Montagerahmen ausgebildet sein, welcher ein rechenförmig ausgebildetes Raster an zumindest einer Rahmenseite aufweist, wie beispielsweise ein handelsüblicher Einsatzrahmen zum Einsatz in Schubladen. Dadurch könnte vorteilhaft eine Kombination zweier Systeme und/oder ein Umstieg von einem System auf ein anderes System vereinfacht werden. Die externe Baueinheit kann insbesondere als zumindest ein Teil eines Montagerahmens, einer Schublade und/oder eines Ablagefachs ausgebildet sein. Die weitere Seitenwand ist vorzugsweise zumindest im Wesentlichen senkrecht zu der Seitenwand angeordnet. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist.

Zusätzlich wird vorgeschlagen, dass das Kontaktelement eine Außenform aufweist, welche zumindest in eine Richtung senkrecht zu einer Aufnahmerichtung des Aufnahmebereichs einen zumindest im Wesentlichen stetig zunehmenden und/oder stetig abnehmenden Verlauf aufweist. Dadurch können insbesondere vorteilhafte Halteeigenschaften des Werkzeugeinsatzes und/oder Werkzeugaufnahmeeinsatzes erreicht werden, insbesondere indem eine ein Werkzeug und/oder eine Werkzeugaufnahme kontaktierende Fläche des Kontaktelements optimiert werden kann. Unter "im Wesentlichen stetig zunehmend und/oder abnehmend" soll insbesondere frei von Teilabschnitten mit gleichbleibender Außenform und/oder frei von Teilabschnitten mit abrupten Knicks, insbesondere mit einem Winkel von 60° oder größer, verstanden werden.

Ferner wird vorgeschlagen, dass sich das Kontaktelement in einem aufnahmebereiten Zustand des Werkzeugeinsatzes und/oder des Werkzeugaufnahmeeinsatzes in ein Inneres des Aufnahmebereichs erstreckt.

Dadurch können insbesondere vorteilhafte Halteeigenschaften des Werkzeugeinsatzes und/oder Werkzeugaufnahmeeinsatzes erreicht werden, insbesondere indem eine Gesamtkontaktfläche und damit beispielsweise auch eine Reibung mit einer Oberfläche des Werkzeugs und/oder der Werkzeugaufnahme bei einem Ein- und/oder Auslagern klein gehalten werden kann. Das Innere des Aufnahmebereichs ist insbesondere zumindest zu einem Großteil, vorzugsweise zumindest in einer Raumebene vollständig, von dem Grundkörper des Werkzeugeinsatzes und/oder des Werkzeugaufnahmeeinsatzes umgeben und/oder umfasst. Insbesondere weist das Innere des Aufnahmebereichs zumindest ein Zentrum auf, welches, insbesondere in einer Draufsicht auf den Werkzeugeinsatz und/oder den Werkzeugaufnahmeeinsatz gesehen, insbesondere als Mittelpunkt und/oder als Schwerpunkt des Aufnahmebereichs ausgebildet ist.

Weiterhin wird vorgeschlagen, dass zumindest ein Teil des zumindest einen Kontaktelements zumindest teilweise eine zumindest im Wesentlichen keilförmige, insbesondere abgestumpft keilförmige, Außenform aufweist. Dadurch können insbesondere vorteilhafte Halteeigenschaften des Werkzeugeinsatzes und/oder Werkzeugaufnahmeeinsatzes erreicht werden, insbesondere indem eine ein Werkzeug und/oder eine Werkzeugaufnahme kontaktierende Fläche des Kontaktelements optimiert werden kann. Insbesondere weist zumindest der Teil des Kontaktelements eine zumindest im Wesentlichen keilförmige, insbesondere abgestumpft keilförmige, Außenform auf, welcher sich in den Aufnahmebereich hinein erstreckt.

Wenn das zumindest eine Kontaktelement einen zwischen zwei Seitenflächen des Kontaktelements aufgespannten Keilwinkel von zumindest 15°, vorzugsweise zumindest 20°, bevorzugt zumindest 25° und besonders bevorzugt höchstens 30° aufweist, können vorteilhaft Halteeigenschaften des Kontaktelements weiter optimiert werden.

Zudem wird vorgeschlagen, dass das Kontaktelement in einem aufnahmebereiten Zustand des Werkzeugeinsatzes und/oder des Werkzeugaufnahmeeinsatzes keilförmig in Richtung eines Inneren des Aufnahmebereichs zuläuft. Dadurch können insbesondere vorteilhafte Halteeigenschaften, beispielsweise eine hohe Stabilität, insbesondere Haltestabilität eines Werkzeugs und/oder einer Werkzeugaufnahme in dem Werkzeugeinsatz und/oder Werkzeugaufnahmeeinsatz, erreicht werden.

Außerdem wird vorgeschlagen, dass eine zu einer Kontaktierung zumindest eines Teils eines in den Aufnahmebereich eingesetzten Werkzeugs und/oder einer in den Aufnahmebereich eingesetzten Werkzeugaufnahme vorgesehene Kontaktoberfläche des Kontaktelements in zumindest einem Teilbereich des Kontaktelements zumindest eine Tangentialebene aufweist, welche zumindest eine Teilkomponente aufweist, die in einer Montagestellung des Werkzeugeinsatzes und/oder des Werkzeugaufnahmeeinsatzes parallel zur Horizontalen verläuft. Dadurch können insbesondere vorteilhafte Halteeigenschaften des Werkzeugeinsatzes und/oder Werkzeugaufnahmeeinsatzes erreicht werden. Insbesondere bildet der Werkzeugeinsatz und/oder Werkzeugaufnahmeeinsatz in der Montagestellung zumindest einen einlagerbereiten Zustand aus.

Des Weiteren wird vorgeschlagen, dass eine zu einer Kontaktierung zumindest eines Teils eines in den Aufnahmebereich eingesetzten Werkzeugs und/oder einer in den Aufnahmebereich eingesetzten Werkzeugaufnahme vorgesehene Kontaktoberfläche des Kontaktelements relativ zu einer, insbesondere in einer Montagestellung des Werkzeugeinsatzes und/oder des Werkzeugaufnahmeeinsatzes vertikalen, Extrusion einer den Aufnahmebereich begrenzenden Aufnahmeöffnung des Aufnahmebereichs in eine Aufnahmerichtung des Aufnahmebereichs und/oder relativ zu einer Verlängerung des Aufnahmebereichs, insbesondere einer Begrenzung des Aufnahmebereichs, in die Aufnahmerichtung, gewinkelt angeordnet ist. Dadurch können insbesondere vorteilhafte Halteeigenschaften des Werkzeugeinsatzes und/oder Werkzeugaufnahmeeinsatzes erreicht werden. Die Extrusion ist insbesondere als eine gedachte, in der Montagestellung in eine Vertikalrichtung verlaufende Fortsetzung der Kontur der Aufnahmeöffnung des Aufnahmebereichs zu verstehen. Die Verlängerung des Aufnahmebereichs ist insbesondere als gedachte Fortführung des Aufnahmebereichs in Vertikalrichtung zu verstehen, welche, insbesondere in einem Montagezustand, einen Winkel relativ zur Vertikalen aufweist, der einem mittleren Winkel zur Vertikalen des Aufnahmebereichs, insbesondere der durch den Grundkörper gebildeten Begrenzung des Aufnahmebereichs, und/oder einem Winkel des Aufnahmebereichs zur Vertikalen an einem in Vertikalrichtung unteren Ende des Aufnahmebereichs entspricht.

Wenn ein Winkel, den die Kontaktoberfläche und die Extrusion der Aufnahmeöffnung einschließen zumindest 1°, vorzugsweise zumindest 3°, vorteilhaft zumindest 5°, bevorzugt zumindest 7° und besonders bevorzugt zumindest 10° beträgt, kann vorteilhaft eine hohe Haltekraft und/oder Haltestabilität eines eingelagerten Werkzeugs und/oder einer eingelagerten Werkzeugaufnahme, insbesondere abhängig von dem Eigengewicht des Werkzeugs und/oder der Werkzeugaufnahme erreicht werden. Vorzugsweise kann der Winkel an das Eigengewicht angepasst ausgebildet sein. Eine Haltekraft wird dadurch vorteilhaft durch eine Wechselwirkung mit einer Schwerkraft erzeugt. Ein höheres Eigengewicht bewirkt bei einer derartigen Anpassung insbesondere einen größeren Winkel zur Vertikalen.

Wenn zudem ein weiterer Winkel, den die Kontaktoberfläche und die Verlängerung des Aufnahmebereichs, insbesondere der Begrenzung des Aufnahmebereichs, einschließen zumindest 1°, vorzugsweise zumindest 3°, vorteilhaft zumindest 5°, bevorzugt zumindest 7° und besonders bevorzugt zumindest 10° beträgt, kann vorteilhaft eine Haltekraft und/oder Haltestabilität des eingelagerten Werkzeugs und/oder einer eingelagerten Werkzeugaufnahme weiter optimiert werden. Zudem kann eine hohe Stabilität des Werkzeugeinsatzes und/oder des Werkzeugaufnahmeeinsatzes erreicht werden.

Wenn außerdem der Winkel, den die Kontaktoberfläche und die Extrusion der Aufnahmeöffnung und/oder der weitere Winkel, den die Kontaktoberfläche und die Verlängerung des Aufnahmebereichs, insbesondere die Begrenzung des Aufnahmebereichs, einschließen höchstens 3°, vorzugsweise höchstens 5°, vorteilhaft höchstens 7°, bevorzugt höchstens 15° und besonders bevorzugt höchstens 25° beträgt, kann vorteilhaft eine gute Haltekraft und/oder Haltestabilität des eingelagerten Werkzeugs und/oder einer eingelagerten Werkzeugaufnahme erreicht werden.

Zudem wird vorgeschlagen, dass der Winkel und der weitere Winkel unterschiedlich groß sind. Dadurch können vorteilhafte Eigenschaften hinsichtlich einer Stabilität erreicht werden. Darunter, dass der Winkel und der weitere Winkel "unterschiedlich groß" sind soll insbesondere verstanden werden, dass der Winkel und der weitere Winkel zumindest in einem einlagerbereiten Zustand einen zur Vertikalen um zumindest 1°, vorzugsweise um zumindest 2°, bevorzugt um zumindest 3° und besonders bevorzugt um zumindest 5° unterschiedlichen Winkel aufspannen.

Weiterhin wird vorgeschlagen, dass die Kontaktoberfläche zumindest teilweise gebogen ausgebildet ist. Dadurch können insbesondere vorteilhafte Lagereigenschaften zur Lagerung von Werkzeugen und/oder Werkzeugaufnahmen geschaffen werden, beispielsweise kann eine Gesamtkontaktfläche vorteilhaft weiter optimiert werden.

Wenn die Kontaktoberfläche zumindest im Wesentlichen in einer Richtung senkrecht zu einer Aufnahmerichtung des Aufnahmebereichs gebogen ist, kann vorteilhaft eine Gesamtkontaktfläche und/oder Haltekraft abhängig von einer Einstecktiefe eines eingelagerten Werkzeugs und/oder einer eingelagerten Werkzeugaufnahme optimiert werden. Unter der Wendung "in einer Richtung gebogen" soll insbesondere verstanden werden, dass ein Objekt und/oder eine Fläche entlang der Richtung gesehen einen Bogen beschreibt und/oder, dass das Objekt und/oder die Fläche in einer Betrachtung senkrecht zu der Richtung einen Krümmungsradius aufweist.

Wenn die Kontaktoberfläche zumindest im Wesentlichen in einer Richtung parallel zu einer Aufnahmerichtung des Aufnahmebereichs gebogen ist, kann vorteilhaft eine Gesamtkontaktfläche bei einer Halterung eines Werkzeugs und/oder einer Werkzeugaufnahme weiter reduziert werden.

Ferner wird vorgeschlagen, dass das zumindest eine Kontaktelement getrennt von dem Grundkörper ausgebildet ist. Dadurch kann vorteilhaft eine Flexibilität erhöht werden, beispielsweise indem eine Mehrzahl verschiedener Kontaktelemente mit demselben Grundkörper kombinierbar sein können.

Wenn zudem das zumindest eine Kontaktelement austauschbar ausgebildet ist, kann dadurch vorteilhaft eine Flexibilität weiter erhöht werden, beispielsweise indem je nach Art des einzulagernden Objekts im Vorfeld der Einlagerung passende Kontaktelemente mit dem Grundkörper kombiniert werden können. Zudem können einzelne fehlerhafte und/oder verschlissene Kontaktelemente vorteilhaft einfach ausgetauscht werden, wodurch insbesondere Kosten und Aufwand bei einer Reparatur reduziert werden können. Die Kontaktelemente können beispielsweise mittels Schienen in den Grundkörper einschiebbar und/oder aus dem Grundkörper entnehmbar sein. Zu einer Befestigung der Kontaktelemente am Grundkörper kann beispielsweise eine Clips-Verbindung vorgesehen sein.

Des Weiteren wird vorgeschlagen, dass zumindest ein Kontaktelement zumindest teilweise flexibel deformierbar ist und/oder zumindest eine zumindest teilweise flexibel deformierbare Kontaktoberfläche aufweist. Dadurch kann vorteilhaft eine Haltekraft und/oder eine Haltestabilität weiter optimiert werden. Das flexibel deformierbare Kontaktelement könnte beispielsweise zumindest teilweise als eine Biegefeder und/oder als eine Torsionsfeder ausgebildet sein. Alternativ könnte das flexibel deformierbare Kontaktelement und/oder die flexibel deformierbare Kontaktoberfläche zumindest teilweise aus einem elastisch komprimierbaren Material, beispielsweise einem Elastomer ausgebildet sein.

Zudem wird vorgeschlagen, dass der Werkzeugeinsatz und/oder der Werkzeugaufnahmeeinsatz zumindest eine Mehrzahl an Kontaktelementen, vorzugsweise zumindest drei, vorteilhaft zumindest vier und bevorzugt zumindest fünf Kontaktelemente aufweist. Dadurch kann vorteilhaft eine Haltekraft und/oder Stabilität weiter optimiert werden. Vorzugsweise sind die Kontaktelemente zumindest teilweise regelmäßig an einem Rand der Aufnahmeöffnung angeordnet.

Erfindungsgemäß ist ein Zentrum der Aufnahmeöffnung und/oder des Aufnahmebereichs, insbesondere ein Schnittpunkt zumindest zweier Normalenvektoren von Kontaktflächen zweier Kontaktelemente, insbesondere in einer Draufsicht gesehen, seitlich versetzt im Grundkörper angeordnet. Dadurch können vorteilhafte Lagereigenschaften zur Lagerung von Werkzeugen und/oder Werkzeugaufnahmen geschaffen werden. Vorteilhaft kann eine hohe Packungsdichte bei einer Lagerung von Werkzeugen und/oder Werkzeugaufnahmen erreicht werden, insbesondere indem durch eine geeignete Anordnung von Werkzeugeinsätzen und/oder Werkzeugaufnahmeeinsätzen zueinander eine verfügbare Lageroberfläche möglichst effektiv genutzt werden kann. Vorteilhaft kann dabei eine Zahl von Werkzeugeinsätzen und/oder Werkzeugaufnahmeeinsätzen pro verfügbarer Lagerfläche optimiert und/oder maximiert werden. Unter "seitlich versetzt im Grundkörper" soll insbesondere in einer Draufsicht gesehen mit ungleichen Abständen zu zumindest zwei gegenüberliegenden seitlichen Begrenzungen, insbesondere den weiteren Seitenwänden, des Grundkörpers verstanden werden. Insbesondere ist ein Zentrum der Aufnahmeöffnung und/oder des Aufnahmebereichs überlappungsfrei mit einem Schwerpunkt des Grundkörpers.

Ferner wird ein System von Werkzeugeinsätzen und/oder Werkzeugaufnahmeeinsätzen mit zumindest zwei Werkzeugeinsätzen und/oder Werkzeugaufnahmeeinsätzen vorgeschlagen, dessen Werkzeugeinsätze und/oder Werkzeugaufnahmeeinsätze so zueinander angeordnet sind, dass Seitenwände der zumindest zwei Werkzeugeinsätze und/oder Werkzeugaufnahmeeinsätze zumindest teilweise ineinandergreifen. Dadurch können vorteilhafte Lagereigenschaften zur Lagerung von Werkzeugen und/oder Werkzeugaufnahmen geschaffen werden. Vorteilhaft kann eine hohe Packungsdichte bei einer Lagerung von Werkzeugen und/oder Werkzeugaufnahmen erreicht werden, insbesondere indem durch eine geeignete Anordnung von Werkzeugeinsätzen und/oder Werkzeugaufnahmeeinsätzen zueinander eine verfügbare Lageroberfläche möglichst effektiv genutzt werden kann. Insbesondere sind beliebig viele Werkzeugeinsätze und/oder Werkzeugaufnahmeeinsätze unter einem Ineinandergreifen zumindest zweier und/oder zumindest teilweise unter einem Ineinandergreifen dreier Werkzeugeinsätze und/oder Werkzeugaufnahmeeinsätze in einer Reihe anordenbar. Erfindungsgemäß ist jeder Werkzeugeinsatz und/oder Werkzeugaufnahmeeinsatz dazu vorgesehen, an zwei gegenüberliegenden Seiten jeweils mit einem weiteren Werkzeugeinsatz und/oder Werkzeugaufnahmeeinsatz ineinander einzugreifen, wobei benachbarte Werkzeugeinsätze und/oder Werkzeugaufnahmeeinsätze jeweils in einer Horizontalebene um 180° gedreht angeordnet sind. Erfindungsgemäß liegen die Aufnahmeöffnungen von in einer Reihe angeordneten Werkzeugeinsätzen und/oder Werkzeugaufnahmeeinsätzen auf zwei überlappungsfreien parallelen Geraden.

Des Weiteren wird ein Werkzeugeinsatz- und/oder Werkzeugaufnahmeeinsatzsystem mit zumindest einem Werkzeugeinsatz und/oder Werkzeugaufnahmeeinsatz und mit zumindest einem weiteren Kontaktelement, insbesondere einem weiteren Satz austauschbarer Kontaktelemente, welches verschieden zu dem Kontaktelement ausgebildet ist, vorgeschlagen. Dadurch kann vorteilhaft eine Flexibilität erhöht werden, insbesondere indem verschiedene Werkzeuge und/oder Werkzeugaufnahmen, insbesondere Werkzeuge und/oder Werkzeugaufnahmen mit verschiedenen Durchmessern, insbesondere Schaftdurchmessern, in dem Werkzeugeinsatz- und/oder Werkzeugaufnahmeeinsatzsystem lagerbar sind. Insbesondere weist das weitere Kontaktelement eine von dem Kontaktelement verschiedene Außenform, beispielsweise eine verschiedene Kontaktoberfläche, einen verschiedenen Winkel, vorzugsweise Keilwinkel, und/oder in zumindest eine Raumebene eine verschiedene Erstreckung auf. Beispielsweise könnten Werkzeugaufnahmen der Größen SK30, SK40, SK50 und/oder HSK-A63 in dem Werkzeugeinsatz- und/oder Werkzeugaufnahmeeinsatzsystem lagerbar sein, wobei insbesondere zu einer Lagerung kleinerer Werkzeugaufnahmen Kontaktelemente verwendet werden, welche länger sind, d.h. sich weiter in ein Inneres des Aufnahmebereichs erstrecken, als zu einer Lagerung größerer Werkzeugaufnahmen. Insbesondere wenn die kleineren Werkzeugaufnahmen Werkzeuge haltern, deren Schneidendurchmesser groß, beispielsweise größer als 70 mm, ist, kann vorteilhaft mit einem Werkzeugeinsatz- und/oder Werkzeugaufnahmeeinsatzsystem mit passenden Kontaktelementen und vergrößertem Aufnahmebereich eine vorteilhafte Packungsdichte, insbesondere unter Ausschluss einer gegenseitigen Berührung zweier Werkzeuge und/oder Werkzeugaufnahmen, ermöglicht werden.

Zudem wird vorgeschlagen, dass zumindest ein weiteres Kontaktelement, insbesondere zumindest die Kontaktelemente zumindest des weiteren Satzes Kontaktelemente, in einer Montagestellung des Werkzeugeinsatzes und/oder des Werkzeugaufnahmeeinsatzes eine maximale horizontale Quererstreckung aufweist, welche zumindest 50 % größer, vorzugsweise zumindest doppelt so groß, bevorzugt zumindest dreimal so groß und besonders bevorzugt zumindest viermal so groß ist wie die maximale horizontale Quererstreckung des zumindest einen Kontaktelements. Dadurch kann vorteilhaft eine Flexibilität erhöht werden, insbesondere indem verschiedene Werkzeuge und/oder Werkzeugaufnahmen, insbesondere Werkzeuge und/oder Werkzeugaufnahmen mit verschiedenen Durchmessern, insbesondere Schaftdurchmessern, in dem Werkzeugeinsatz- und/oder Werkzeugaufnahmeeinsatzsystem lagerbar sind. Unter einer "maximalen horizontalen Quererstreckung" eines Objekts soll insbesondere eine größte Seitenlänge eines kleinsten geometrischen Quaders verstanden werden, welcher das Objekt gerade noch vollständig umschließt und welcher zumindest eine zu einer Horizontalen parallel verlaufende Seitenkante aufweist.

Außerdem wird vorgeschlagen, dass zumindest ein Teil eines weiteren Kontaktelements, insbesondere zumindest ein Teil eines der Kontaktelemente des zumindest einen weiteren Satzes Kontaktelemente, in einer Montagestellung des Werkzeugeinsatzes und/oder des Werkzeugaufnahmeeinsatzes eine maximale, in den Aufnahmebereich hinein ragende horizontale Quererstreckung aufweist, welche zumindest 10 %, vorzugsweise zumindest 15 %, vorteilhaft zumindest 20 %, bevorzugt zumindest 25 % und besonders bevorzugt zumindest 30 % einer maximalen horizontalen Quererstreckung des Aufnahmebereichs entspricht. Dadurch kann vorteilhaft eine Flexibilität weiter erhöht werden, insbesondere indem Werkzeuge und/oder Werkzeugaufnahmen mit reduzierten Durchmessern, insbesondere Schaftdurchmessern sicher in dem Werkzeugeinsatz- und/oder Werkzeugaufnahmeeinsatzsystem gehaltert werden können.

Zusätzlich wird ein Werkzeug- und/oder Werkzeugaufnahmelagersystem mit zumindest einem Werkzeugeinsatz und/oder Werkzeugaufnahmeeinsatz, mit einem System von Werkzeugeinsätzen und/oder Werkzeugaufnahmeeinsätzen und/oder mit einem Werkzeugeinsatz- und/oder Werkzeugaufnahmeeinsatzsystem und mit einer Werkzeuglagereinheit vorgeschlagen, welche zumindest eine Montageschiene zur Montage zumindest eines Werkzeugeinsatzes und/oder eines Werkzeugaufnahmeeinsatzes aufweist. Dadurch kann insbesondere eine vorteilhafte Lagereinrichtung für Werkzeuge und/oder Werkzeugablagen geschaffen werden, welche insbesondere eine Lagerung mit einer hohen Packungsdichte erlaubt. Insbesondere ist die Werkzeuglagereinheit als ein Werkzeugschrank, ein Werkzeugwagen und/oder eine Ablage eines Werkzeugeinstell- und/oder Werkzeugmessgeräts und/oder als zumindest ein Teil eines Werkzeugschranks, eines Werkzeugwagens und/oder einer Ablage eines Werkzeugeinstell- und/oder Werkzeugmessgeräts ausgebildet. Vorzugsweise ist die Montageschiene relativ zu einer Grundeinheit der Werkzeuglagereinheit beweglich gelagert.

Ferner wird vorgeschlagen, dass die Werkzeugeinsätze und/oder Werkzeugaufnahmeeinsätze in der Montageschiene so positioniert sind, dass Aufnahmeöffnungen der Aufnahmebereiche der Werkzeugeinsätze und/oder Werkzeugaufnahmeeinsätze in zwei zumindest im Wesentlichen parallelen, seitlich zueinander versetzten Reihen angeordnet sind. Dadurch kann vorteilhaft ein Werkzeug- und/oder Werkzeugaufnahmelagersystem geschaffen werden, welches eine besonders vorteilhafte Packungsdichte für eingelagerte Werkzeuge und/oder Werkzeugaufnahmen aufweist, wodurch insbesondere eine vorteilhafte Raumersparnis erzielt werden kann. Insbesondere sind die seitlich zueinander versetzten Reihen in Montagestellung in einer gemeinsamen, zu einer Horizontalebene parallelen, Ebene angeordnet.

Der erfindungsgemäße Werkzeugeinsatz und/oder Werkzeugaufnahmeeinsatz, das erfindungsgemäße System von Werkzeugeinsätzen und/oder Werkzeugaufnahmeeinsätzen und das erfindungsgemäße Werkzeug- und/oder Werkzeugaufnahmelagersystem soll/sollen hierbei nicht auf die oben beschriebenen Anwendungen und Ausführungsformen beschränkt sein. Insbesondere kann der erfindungsgemäße Werkzeugeinsatz und/oder Werkzeugaufnahmeeinsatz, das erfindungsgemäße System von Werkzeugeinsätzen und/oder Werkzeugaufnahmeeinsätzen und das erfindungsgemäße Werkzeug- und/oder Werkzeugaufnahmelagersystem zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind drei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische, perspektivische Ansicht eines Werkzeugeinsatzes und/oder Werkzeugaufnahmeeinsatzes,
- Fig. 2: den Werkzeugeinsatz und/oder Werkzeugaufnahmeeinsatz mit einer eingelagerten Werkzeugaufnahme,
- Fig. 3: eine schematische Draufsicht auf den Werkzeugeinsatz und/oder Werkzeugaufnahmeeinsatz,
- Fig. 4: eine schematische Schnittansicht des Werkzeugeinsatzes und/oder Werkzeugaufnahmeeinsatzes,
- Fig. 5: schematische Draufsichten auf unterschiedliche Werkzeugeinsätze und/oder Werkzeugaufnahmeeinsätze,
- Fig. 6: eine schematische, perspektivische Ansicht eines Systems von Werkzeugeinsätzen und/oder Werkzeugaufnahmeeinsätzen,
- Fig. 7: eine schematische, perspektivische Ansicht eines Werkzeug- und/oder Werkzeugaufnahmelagersystems mit Werkzeugeinsätzen und/oder Werkzeugaufnahmeeinsätzen,
- Fig. 8: ein Werkzeugeinsatz- und/oder Werkzeugaufnahmeeinsatzsystem mit dem Werkzeugeinsatz und/oder Werkzeugaufnahmeeinsatz und verschiedenen Kontaktelementen,
- Fig. 9: einen Ausschnitt einer schematischen Schnittansicht eines Werkzeugeinsatzes und/oder Werkzeugaufnahmeeinsatzes mit einem alternativen Kontaktelement,
- Fig. 10: einen Querschnitt durch das alternative Kontaktelement und
- Fig. 11: eine schematische, perspektivische Ansicht eines nicht erfindungsgemäßen, alternativen Werkzeugeinsatzes und/oder Werkzeugaufnahmeeinsatzes.

### Beschreibung der Ausführungsbeispiele

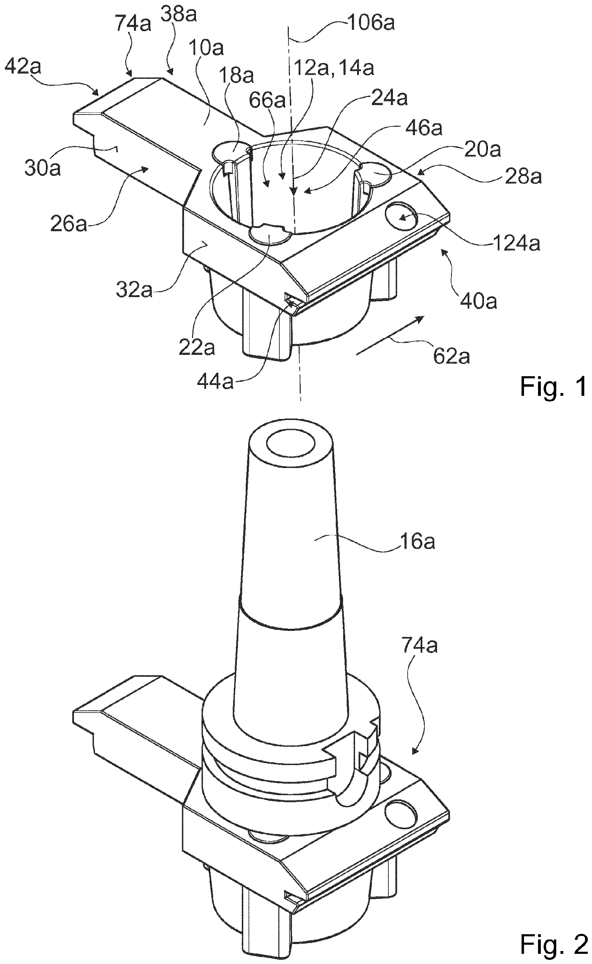

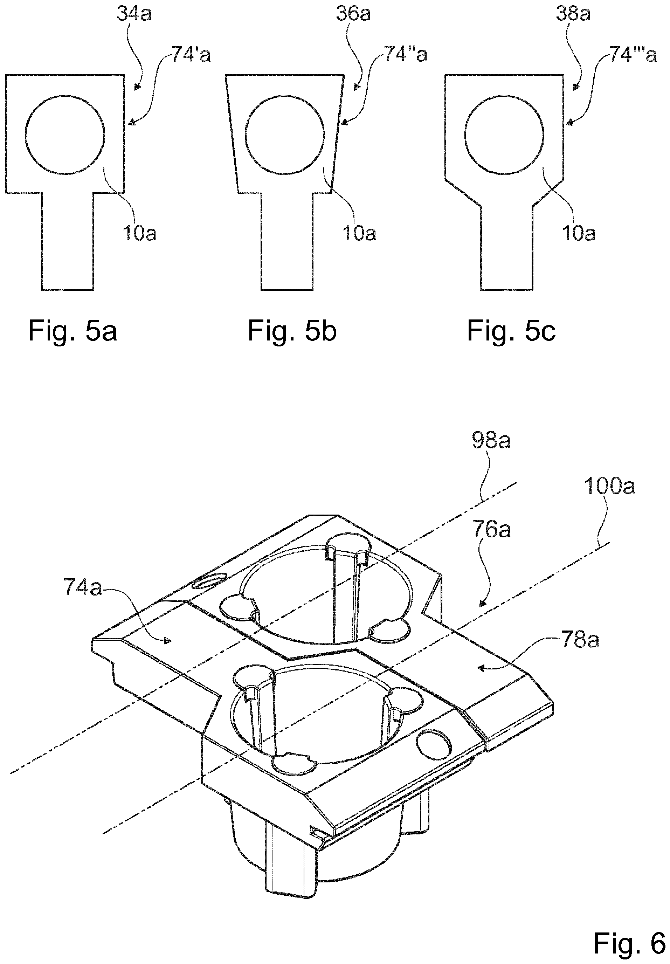

Fig. 1 zeigt einen Werkzeugeinsatz und/oder Werkzeugaufnahmeeinsatz 74a. Der Werkzeugeinsatz und/oder Werkzeugaufnahmeeinsatz 74a ist als Werkzeugablageeinsatz und/oder Werkzeugaufnahmeablageeinsatz ausgebildet. Der Werkzeugeinsatz und/oder Werkzeugaufnahmeeinsatz 74a weist einen Grundkörper 10a auf. Der Grundkörper 10a weist in einer Draufsicht eine Form eines oben geschlossenen Ypsilons 38a auf (vgl. auch Fig. 5c). Der Grundkörper 10a weist einen Aufnahmebereich 14a auf. Der Aufnahmebereich 14a ist als eine Vertiefung 12a in dem Grundkörper 10a ausgebildet. Die Vertiefung 12a ist durch den Grundkörper 10a durchgehend ausgebildet. Alternativ kann der Aufnahmebereich 14a und/oder die Vertiefung 12a auch nach unten abgeschlossen ausgebildet sein. Der Aufnahmebereich 14a ist zu einer zumindest teilweisen Aufnahme zumindest eines Werkzeugs und/oder zumindest einer Werkzeugaufnahme 16a vorgesehen (vgl. Fig. 2). Bei einer Aufnahme eines Werkzeugs und/oder einer Werkzeugaufnahme 16a wird das Werkzeug und/oder die Werkzeugaufnahme 16a von oben in eine Aufnahmerichtung 24a in den Aufnahmebereich 14a eingebracht.

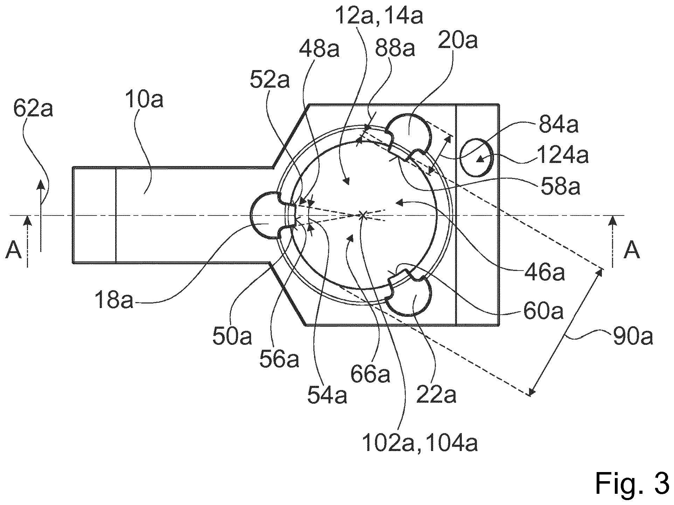

Der Aufnahmebereich 14a ist in einem breiten Teil der Form des oben geschlossenen Ypsilons 38a angeordnet. Der Aufnahmebereich 14a ist in einem gegabelten Teil des Ypsilons der Form des oben geschlossenen Ypsilons 38a angeordnet. Der Aufnahmebereich 14a weist ein Inneres 46a auf. Das Innere 46a des Aufnahmebereichs 14a ist als ein durch die Vertiefung 12a gebildetes freies Volumen zu verstehen. Der Aufnahmebereich 14a weist ein Zentrum 102a auf (vgl. Fig. 3). Das Zentrum 102a des Aufnahmebereichs 14a ist mittig in dem Aufnahmebereich 14a angeordnet. Erfindungsgemäß weist der Aufnahmebereich 14a eine Aufnahmeöffnung 66a auf. Die Aufnahmeöffnung 66a ist kreisförmig ausgebildet. Die Aufnahmeöffnung 66a begrenzt den Aufnahmebereich 14a in Aufnahmerichtung 24a. Die Aufnahmeöffnung 66a weist ein Zentrum 104a auf (vgl. Fig. 3). Das Zentrum 102a des Aufnahmebereichs 14a und das Zentrum 104a der Aufnahmeöffnung 66a sind beide auf einer zentralen Achse 106a angeordnet. Das Zentrum 102a des Aufnahmebereichs 14a ist seitlich versetzt im Grundkörper 10a angeordnet. Das Zentrum 104a der Aufnahmeöffnung 66a ist seitlich versetzt im Grundkörper 10a angeordnet. Die Aufnahmeöffnung 66a weist eine Quererstreckung 90a auf (vgl. Fig. 3). Die Quererstreckung 90a der Aufnahmeöffnung 66a verläuft parallel zu einer Horizontalen 62a. Die Quererstreckung 90a der Aufnahmeöffnung 66a entspricht einem Durchmesser der kreisförmigen Aufnahmeöffnung 66a.

Der Grundkörper 10a weist ein Montageelement 44a auf. Das Montageelement 44a ist an einer weiteren Seitenwand 40a, 42a des Grundkörpers 10a angeordnet. Das Montageelement 44a ist zu einer Montage des Grundkörpers 10a an einer externen Baueinheit vorgesehen. Das Montageelement 44a ist als eine Montageschiene ausgebildet. Alternativ kann das Montageelement 44a auch als ein Loch, beispielsweise ein Schraub- und/oder Nietloch, als ein Rastelement und/oder als ein anderweitiges Element, welches zu einer Montage an einer externen Baueinheit geeignet ist ausgebildet sein. Der Grundkörper 10a ist schraubenfrei an einer externen Baueinheit, beispielsweise einem Montagerahmen, montierbar. Der Grundkörper 10a weist ein Rastelement (nicht gezeigt) auf. Das Rastelement ist zu einer Montage des Grundkörpers 10a an der externen Baueinheit, beispielswiese dem Montagerahmen, vorgesehen. Das Rastelement ist auf einer dem Montageelement 44a gegenüberliegenden weiteren Seitenwand 42a angeordnet. Das Rastelement ist dazu vorgesehen, einen Formschluß mit einem korrespondierenden Rastelement des Montagerahmens zu bilden. Alternativ oder zusätzlich kann zu der Befestigung des Grundkörpers 10a an der externen Baueinheit, insbesondere dem Montagerahmen, ein Untergriff, welcher in zumindest einen Teil der Baueinheit eingreift und/oder zumindest den Montagerahmen untergreift, vorgesehen sein. Alternativ oder zusätzlich kann eine Befestigung des Grundkörpers 10a an der externen Baueinheit, insbesondere dem Montagerahmen, mittels einer Schraube vorgesehen sein. Der Grundkörper 10a ist auf den Seiten der weiteren Seitenwände 40a, 42a relativ zur Horizontalen 62a abgeschrägt. Die Abschrägung ist zu einer Anbringung eines Labels vorgesehen. Zudem weist der Grundkörper 10a in dem abgeschrägten Bereich einen gedomten, bzw. abgesenkten Bereich 124a auf. Der gedomte, bzw. abgesenkte Bereich 124a ist zu einer, insbesondere verrutschsicheren, Anbringung eines Labels, beispielsweise eines Aufklebers vorgesehen.

Der Werkzeugeinsatz und/oder Werkzeugaufnahmeeinsatz 74a weist Seitenwände 26a, 28a auf. Die Seitenwände 26a, 28a sind komplementär zueinander ausgebildet. Die Seitenwände 26a, 28a verlaufen parallel zu einer Aufnahmerichtung 24a des Aufnahmebereichs 14a. Die Seitenwände 26a, 28a sind an zwei gegenüberliegenden Außenseiten des Grundkörpers 10a angeordnet. Die zueinander komplementären Seitenwände 26a, 28a sind dazu vorgesehen, teilweise mit Seitenwänden weiterer Werkzeugeinsätze und/oder Werkzeugaufnahmeeinsätze ineinanderzugreifen. Die Seitenwände 26a, 28a weisen in einer Draufsicht eine stufige, insbesondere abgeschrägt stufige, Form auf.

Die Seitenwand 26a weist Seitenflächen 30a, 32a auf. Die Seitenflächen 30a, 32a bilden Kontaktflächen zu einer weiteren Seitenwand aus. Die Seitenflächen 30a, 32a einer Seitenwand 26a der komplementär zueinander ausgebildeten Seitenwände 26a, 28a verlaufen auf wenigstens zwei voneinander wesentlich verschiedenen Ebenen. Zwei der durch die Seitenflächen 30a, 32a der Seitenwand 26a der komplementär zueinander ausgebildeten Seitenwände 26a, 28a definierten Ebenen verlaufen parallel zueinander. Die Seitenflächen 30a, 32a sind eben ausgebildet. Die Seitenflächen 30a, 32a verlaufen senkrecht zu einer horizontalen Oberfläche des Grundkörpers 10a. Die Seitenflächen 30a, 32a sind über eine, eine weitere Seitenfläche ausbildende weitere Seitenwand miteinander verbunden.

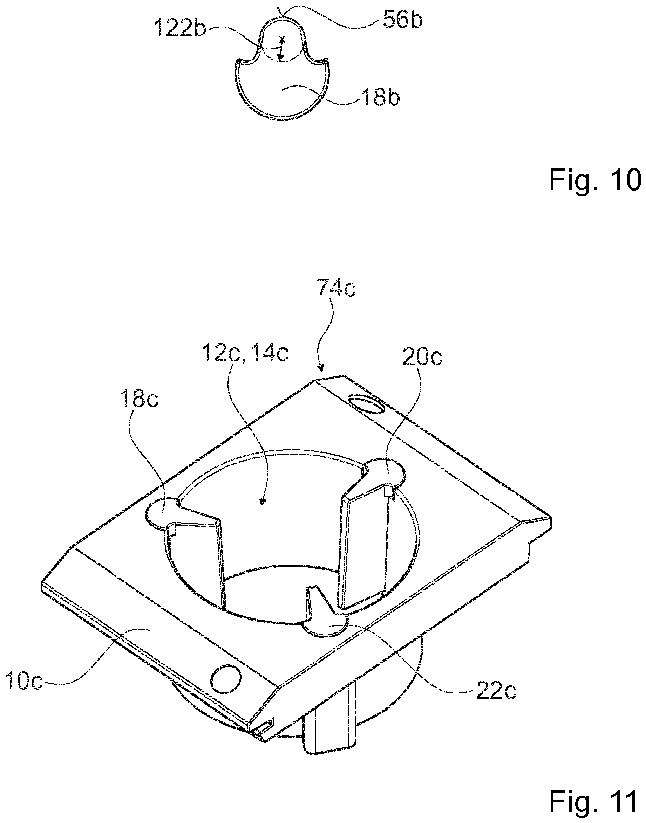

Der Werkzeugeinsatz und/oder Werkzeugaufnahmeeinsatz 74a weist eine Mehrzahl Kontaktelemente 18a, 20a, 22a auf. Der Werkzeugeinsatz und/oder Werkzeugaufnahmeeinsatz 74a weist drei Kontaktelemente 18a, 20a, 22a auf. Die Kontaktelemente 18a, 20a, 22a sind zu einer Ausbildung einer kontaktierenden Halterung des Werkzeugs und/oder der Werkzeugaufnahme 16a vorgesehen. Die Kontaktelemente 18a, 20a, 22a weisen jeweils eine Kontaktoberfläche 56a, 58a, 60a auf. Die Kontaktoberflächen 56a, 58a, 60a sind zu einer Kontaktierung eines Teils des in den Aufnahmebereich 14a eingesetzten Werkzeugs und/oder der in den Aufnahmebereich 14a eingesetzten Werkzeugaufnahme 16a vorgesehen. Die Kontaktoberflächen 56a, 58a, 60a sind eben ausgebildet. Alternativ können die Kontaktoberflächen 56a, 58a, 60a zumindest teilweise gebogen und/oder strukturiert ausgebildet sein (vgl. auch Fig. 10). Das Kontaktelement 18a, 20a, 22a ist teilweise flexibel deformierbar. Die Kontaktoberfläche 56a, 58a, 60a ist teilweise flexibel deformierbar.

Die Kontaktelemente 18a, 20a, 22a sind teilweise innerhalb des Aufnahmebereichs 14a angeordnet. Die Kontaktelemente 18a, 20a, 22a ragen in den Aufnahmebereich 14a hinein. Das Kontaktelement 18a, 20a, 22a erstreckt sich in einem aufnahmebereiten Zustand des Werkzeugeinsatzes und/oder des Werkzeugaufnahmeeinsatzes 74a in das Innere 46a des Aufnahmebereichs 14a. Der Teil des Kontaktelements 18a, 20a, 22a, welcher sich in das Innere 46a des Aufnahmebereichs 14a erstreckt, weist eine Quererstreckung 88a auf. Die sich in das Innere 46a des Aufnahmebereichs 14a erstreckende Quererstreckung 88a des in Fig. 3 gezeigten Kontaktelements 20a entspricht etwa 5 % einer Quererstreckung 90a der Aufnahmeöffnung 66a. Eine gesamte Quererstreckung 84a des montierten Kontaktelements 20a in eine Horizontalrichtung beträgt etwa 30 % der Quererstreckung 90a der Aufnahmeöffnung 66a. Der Teil des Kontaktelements 18a, 20a, 22a, der sich in das Innere 46a des Aufnahmebereichs 14a erstreckt, weist eine teilweise keilförmige Außenform 48a auf. Die teilweise keilförmige Außenform 48a ist als abgestumpfte Keilform ausgebildet. Das Kontaktelement 18a, 20a, 22a läuft in einem aufnahmebereiten Zustand des Werkzeugeinsatzes und/oder des Werkzeugaufnahmeeinsatzes 74a keilförmig in Richtung des Inneren 46a des Aufnahmebereichs 14a zu. Das Kontaktelement 18a, 20a, 22a weist zwei Seitenflächen 50a, 52a auf. Die keilförmige Außenform 48a der Kontaktelemente 18a, 20a, 22a spannt einen Keilwinkel 54a zwischen den zwei Seitenflächen 50a, 52a des Kontaktelements 18a, 20a, 22a auf. Der Keilwinkel 54a beträgt 25°.

Das Kontaktelement 18a, 20a, 22a ist getrennt von dem Grundkörper 10a ausgebildet. Das Kontaktelement 18a, 20a, 22a ist austauschbar ausgebildet. Der Grundkörper 10a weist ein Aufnahmeelement 114a zu einer Aufnahme eines Kontaktelements 18a, 20a, 22a auf. Das Aufnahmeelement 114a ist als eine Schiene ausgebildet. Bei einem Einsetzen und/oder Austauschen eines Kontaktelements 18a, 20a, 22a wird das Kontaktelement 18a, 20a, 22a in das Aufnahmeelement 114a eingeschoben. Vorzugsweise weist das Aufnahmeelement 114a einen Rastmechanismus zu einer Verrastung des Kontaktelements 18a, 20a, 22a nach einem Einschieben in das Aufnahmeelement 114a in einer Verrastposition auf. Ein derartiger Rastmechanismus kann beispielsweise durch einen Formschluss flexibler Kunststoffteile ineinander realisiert werden.

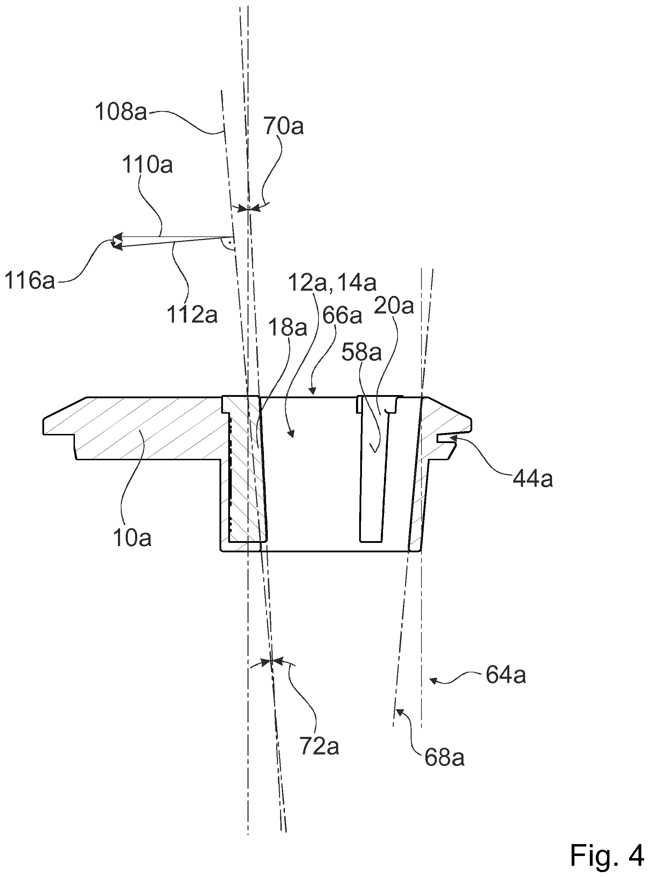

Fig. 4 zeigt eine seitliche Schnittansicht eines Werkzeugeinsatzes und/oder Werkzeugaufnahmeeinsatzes 74a entlang einer in Fig. 3 angedeuteten Schnittebene A. Die Kontaktoberflächen 56a, 58a, 60a weisen in einem Teilbereich des Kontaktelements 18a, 20a, 22a eine Tangentialebene 108a auf. Die Tangentialebene 108a weist einen Normalenvektor 112a auf. Die Tangentialebene 108a, insbesondere der Normalenvektor 112a der Tangentialebene108a, weist eine Teilkomponente 110a auf, die in einer Montagestellung des Werkzeugeinsatzes und/oder des Werkzeugaufnahmeeinsatzes 74a parallel zu der Horizontalen 62a verläuft. Die Tangentialebene 108a, insbesondere der Normalenvektor 112a der Tangentialebene108a, weist eine Teilkomponente 116a auf, die in einer Montagestellung des Werkzeugeinsatzes und/oder des Werkzeugaufnahmeeinsatzes 74a senkrecht zu der Horizontalen 62a verläuft. Der Normalenvektor 112a der Tangentialebene 108a bildet eine Linearkombination der senkrechten Teilkomponente 116a und der horizontalen Teilkomponente 110a aus.

Das Kontaktelement 18a, 20a, 22a weist eine Außenform auf. Die Außenform des Kontaktelements 18a, 20a, 22a weist in eine Richtung senkrecht zu der Aufnahmerichtung 24a des Aufnahmebereichs 14a einen stetig zunehmenden Verlauf auf. Alternativ könnte die Außenform einen stetig abnehmenden Verlauf und/oder einen zumindest einmal, vorzugsweise mehrfach, zwischen stetiger Zunahme und stetiger Abnahme wechselnden Verlauf aufweisen.

Die Kontaktoberfläche 56a, 58a, 60a des Kontaktelements 18a, 20a, 22a ist relativ zu einer Extrusion 64a der Aufnahmeöffnung 66a gewinkelt angeordnet. Ein Winkel 70a den die Kontaktoberfläche 56a, 58a, 60a und die Extrusion 64a der Aufnahmeöffnung 66a einschließen beträgt 3°. Die Kontaktoberfläche 56a, 58a, 60a des Kontaktelements 18a, 20a, 22a ist relativ zu einer Verlängerung 68a des Aufnahmebereichs 14a in die Aufnahmerichtung 24a gewinkelt angeordnet. Ein weiterer Winkel 72a den die Kontaktoberfläche 56a, 58a, 60a und die Verlängerung 68a des Aufnahmebereichs 14a einschließen beträgt 2°. Der Winkel 70a den die Kontaktoberfläche 56a, 58a, 60a und die Extrusion 64a der Aufnahmeöffnung 66a einschließen und der weitere Winkel 72a den die Kontaktoberfläche 56a, 58a, 60a und die Verlängerung 68a des Aufnahmebereichs 14a einschließen sind unterschiedlich groß. Der Winkel 70a den die Kontaktoberfläche 56a, 58a, 60a und die Extrusion 64a der Aufnahmeöffnung 66a einschließen ist größer als der weitere Winkel 72a den die Kontaktoberfläche 56a, 58a, 60a und die Verlängerung 68a des Aufnahmebereichs 14a einschließen.

Fig. 5 zeigt unterschiedliche Formen des Werkzeugeinsatzes und/oder Werkzeugaufnahmeeinsatzes 74'a, 74"a, 74‴a in einer Draufsicht. Fig. 5a zeigt einen Werkzeugeinsatz und/oder Werkzeugaufnahmeeinsatz 74'a, welcher eine Schaufelform 34a ausbildet. Fig. 5b zeigt einen Werkzeugeinsatz und/oder Werkzeugaufnahmeeinsatz 74"a, welcher eine Spachtelform 36a ausbildet. Fig. 5c zeigt einen Werkzeugeinsatz und/oder Werkzeugaufnahmeeinsatz 74‴a, welcher eine Form eines oben geschlossenen Ypsilons 38a ausbildet.

Fig. 6 zeigt ein System 76a von Werkzeugeinsätzen und/oder Werkzeugaufnahmeeinsätzen 74a, 78a mit zumindest zwei Werkzeugeinsätzen und/oder Werkzeugaufnahmeeinsätzen 74a, 78a. Erfindungsgemäß sind die Werkzeugeinsätze und/oder Werkzeugaufnahmeeinsätze 74a, 78a so zueinander angeordnet, dass Seitenwände 26a, 28a der zwei Werkzeugeinsätze und/oder Werkzeugaufnahmeeinsätze 74a, 78a teilweise ineinandergreifen. Der erste Werkzeugeinsatz und/oder Werkzeugaufnahmeeinsatz 74a, ist um 180° in der Horizontalebene rotiert und an den zweiten Werkzeugeinsatz und/oder Werkzeugaufnahmeeinsatz 78a angrenzend angeordnet. Auf beiden Seiten des Systems 76a können weitere Systeme von Werkzeugeinsätzen und/oder Werkzeugaufnahmeeinsätzen angeordnet werden. Durch ein erfindungsgemäßes Anordnen einer Mehrzahl von Werkzeugeinsätzen und/oder Werkzeugaufnahmeeinsätzen 74a, 78a in Systemen 76a bildet sich eine Anordnung in welcher Werkzeuge und/oder Werkzeugaufnahmen 16a in zwei seitlich zueinander versetzten Reihen 98a, 100a lagerbar sind. Dadurch kann entlang einer Richtung parallel zu den Reihen 98a, 100a vorteilhaft eine besonders große Anzahl an Werkzeugen und/oder Werkzeugaufnahmen 16a auf kleinem Raum untergebracht werden.

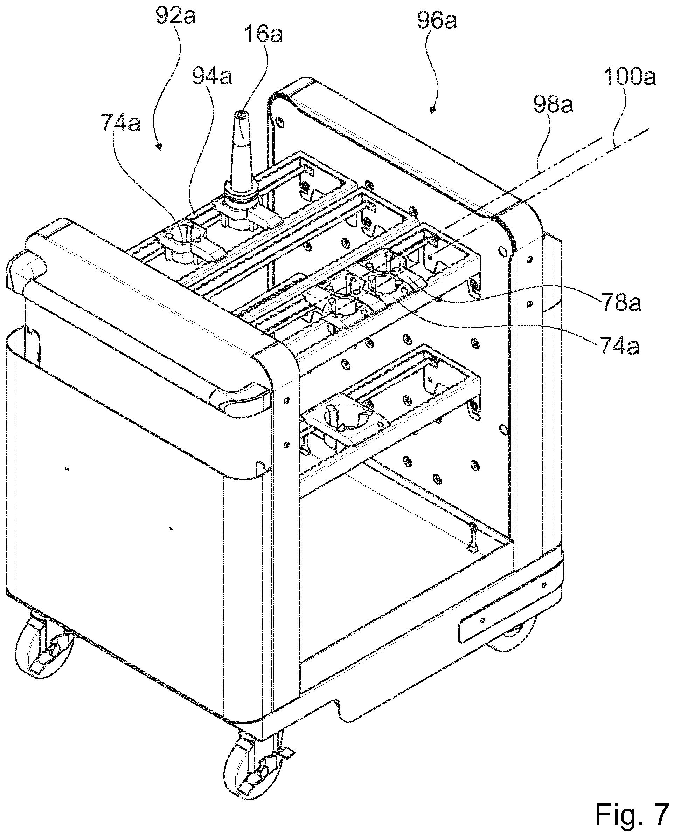

Fig. 7 zeigt ein Werkzeug- und/oder Werkzeugaufnahmelagersystem 96a mit Werkzeugeinsätzen und/oder Werkzeugaufnahmeeinsätzen 74a, 78a. Das Werkzeug- und/oder Werkzeugaufnahmelagersystem 96a weist eine Werkzeuglagereinheit 92a auf. Die Werkzeuglagereinheit 92a ist als ein fahrbarer Beistellwagen ausgebildet. Die Werkzeuglagereinheit 92a weist Montageschienen 94a auf. Die Montageschienen 94a sind zu einer Montage von Werkzeugeinsätzen und/oder Werkzeugaufnahmeeinsätzen 74a, 78a vorgesehen. Die Montageschiene 94a ist zu einer Befestigung der Werkzeugeinsätze und/oder Werkzeugaufnahmeeinsätze 74a, 78a mittels deren Montageelement 44a vorgesehen. Die Werkzeuglagereinheit 92a bildet eine externe Baueinheit aus. In einer Montageschiene 94a der Werkzeuglagereinheit 92a sind Systeme 76a von Werkzeugeinsätzen und/oder Werkzeugaufnahmeeinsätzen 74a, 78a montierbar. Die Werkzeugeinsätze und/oder Werkzeugaufnahmeeinsätze 74a, 78a eines Systems 76a von Werkzeugeinsätzen und/oder Werkzeugaufnahmeeinsätzen 74a, 78a sind in der Montageschiene 94a so positioniert, dass Aufnahmeöffnungen 66a der Aufnahmebereiche 14a der Werkzeugeinsätze und/oder Werkzeugaufnahmeeinsätze 74a, 78a in zwei parallelen, seitlich zueinander versetzten Reihen 98a, 100a angeordnet sind.

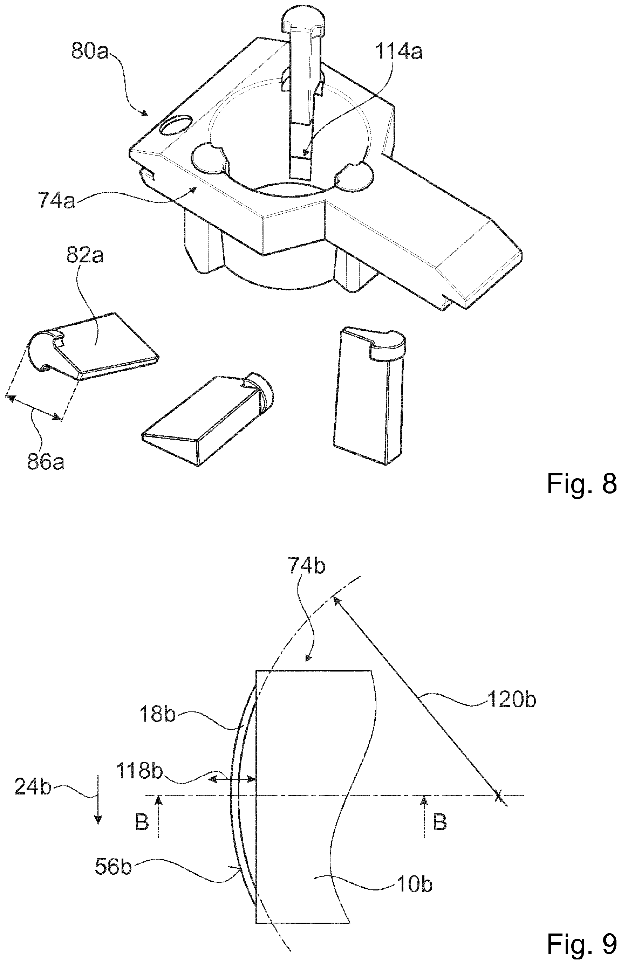

Fig. 8 zeigt ein Werkzeugeinsatz- und/oder Werkzeugaufnahmeeinsatzsystem 80a mit zumindest einem Werkzeugeinsatz und/oder Werkzeugaufnahmeeinsatz 74a. Das Werkzeugeinsatz- und/oder Werkzeugaufnahmeeinsatzsystem 80a weist ein weiteres Kontaktelement 82a auf. Das weitere Kontaktelement 82a ist Teil eines weiteren Satzes austauschbarer Kontaktelemente. Das weitere Kontaktelement 82a ist verschieden zu dem Kontaktelement 18a, 20a, 22a ausgebildet. Das weitere Kontaktelement 82a weist in einer Montagestellung des Werkzeugeinsatzes und/oder des Werkzeugaufnahmeeinsatzes 74a eine maximale horizontale Quererstreckung 86a auf. Die maximale horizontale Quererstreckung 86a des weiteren Kontaktelements 82a ist zumindest 50 % größer als die maximale horizontale Quererstreckung 84a des Kontaktelements 18a, 20a, 22a. Der Teil des weiteren Kontaktelements 82a, welcher in einer Montagestellung des Werkzeugeinsatzes und/oder des Werkzeugaufnahmeeinsatzes 74a bei montiertem weiterem Kontaktelement 82a in den Aufnahmebereich 14a hineinragt, weist eine horizontale Quererstreckung 88a auf, welche zumindest 10 % einer maximalen horizontalen Quererstreckung 90a des Aufnahmebereichs 14a entspricht (vgl. auch Fig. 3).

In den Figuren 9 bis 11 sind zwei weitere Ausführungsbeispiele gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 8, verwiesen werden kann. Zur Unterscheidung der Ausführungsbeispiele ist der Buchstabe a den Bezugszeichen des Ausführungsbeispiels in den Figuren 1 bis 8 nachgestellt. In den Ausführungsbeispielen der Figuren 9 bis 11 ist der Buchstabe a durch die Buchstaben b und c ersetzt.

Fig. 9 zeigt einen Ausschnitt einer schematischen Schnittansicht eines Werkzeugeinsatzes und/oder Werkzeugaufnahmeeinsatzes 74b mit einem alternativen Kontaktelement 18b entlang einer Schnittebene A (vgl. Fig. 3). Das Kontaktelement 18b ist gebogen ausgebildet. Das Kontaktelement 18b weist eine Kontaktoberfläche 56b auf. Die Kontaktoberfläche 56b ist gebogen ausgebildet. Das Kontaktelement 18b ist flexibel ausgebildet. Das Kontaktelement 18b bildet eine Biegefeder aus. Die Biegefeder ist im Wesentlichen in eine Federrichtung 118b vorgespannt. Die Federrichtung 118b verläuft im Wesentlichen senkrecht zu einer Aufnahmerichtung 24b in welche ein Werkzeug und/oder eine Werkzeugaufnahme 16b bei einem Einlagern in einen Aufnahmebereich 14b des Werkzeugeinsatzes und/oder Werkzeugaufnahmeeinsatzes 74b bewegt wird. Die Kontaktoberfläche 56b ist in einer zu der Aufnahmerichtung 24b des Aufnahmebereichs 14b parallelen Richtung gebogen. Ein Krümmungsradius 120b der Krümmung der gebogenen bzw. gekrümmten Kontaktoberfläche 56b liegt in einer Ebene mit der Schnittebene A. Bei einem Einlagern des Werkzeugs und/oder der Werkzeugaufnahme 16b in dem Werkzeugeinsatz und/oder Werkzeugaufnahmeeinsatz 74b wird das Kontaktelement 18b in Federrichtung 118b ausgelenkt.

Fig. 10 zeigt einen Querschnitt durch das Kontaktelement 18b entlang einer in Fig. 9 angedeuteten Schnittebene B. Die Kontaktoberfläche 56b ist in einer Richtung parallel zu der Aufnahmerichtung 24b des Aufnahmebereichs 14b gebogen. Ein weiterer Krümmungsradius 122b der Krümmung der gebogenen, bzw. gekrümmten Kontaktoberfläche 56b liegt in einer Ebene mit der Schnittebene B.

Fig. 11 zeigt einen nicht erfindungsgemäßen, alternativen Werkzeugeinsatz und/oder Werkzeugaufnahmeeinsatz 74c. Der Werkzeugeinsatz und/oder Werkzeugaufnahmeeinsatz 74c weist eine Rechteckform auf. Der Werkzeugeinsatz und/oder Werkzeugaufnahmeeinsatz 74c weist einen Aufnahmebereich 14c auf. Der Aufnahmebereich 14c ist mittig in einem Grundkörper 10c des Werkzeugeinsatzes und/oder Werkzeugaufnahmeeinsatzes 74c angeordnet.

### Bezugszeichen

- 10: Grundkörper
- 12: Vertiefung
- 14: Aufnahmebereich
- 16: Werkzeugaufnahme
- 18: Kontaktelement
- 20: Kontaktelement
- 22: Kontaktelement
- 24: Aufnahmerichtung
- 26: Seitenwand
- 28: Seitenwand
- 30: Seitenfläche
- 32: Seitenfläche
- 34: Schaufelform
- 36: Spachtelform
- 38: Ypsilonform
- 40: Weitere Seitenwand
- 42: Weitere Seitenwand
- 44: Montageelement
- 46: Inneres
- 48: Keilförmige Außenform
- 50: Seitenfläche
- 52: Seitenfläche
- 54: Keilwinkel
- 56: Kontaktoberfläche
- 58: Kontaktoberfläche
- 60: Kontaktoberfläche
- 62: Horizontale
- 64: Extrusion
- 66: Aufnahmeöffnung
- 68: Verlängerung
- 70: Winkel
- 72: Weiterer Winkel
- 74: Werkzeugeinsatz und/oder Werkzeugaufnahmeeinsatz
- 76: System
- 78: Werkzeugeinsatz und/oder Werkzeugaufnahmeeinsatz
- 80: Werkzeugeinsatz- und/oder Werkzeugaufnahmeeinsatzsystem
- 82: Weiteres Kontaktelement
- 84: Quererstreckung
- 86: Quererstreckung
- 88: Quererstreckung
- 90: Quererstreckung
- 92: Werkzeuglagereinheit
- 94: Montageschiene
- 96: Werkzeug- und/oder Werkzeugaufnahmelagersystem
- 98: Reihe
- 100: Reihe
- 102: Zentrum
- 104: Zentrum
- 106: Achse
- 108: Tangentialebene
- 110: Teilkomponente
- 112: Normalenvektor
- 114: Aufnahmeelement
- 116: Teilkomponente
- 118: Federrichtung
- 120: Krümmungsradius
- 122: Weiterer Krümmungsradius
- 124: Abgesenkter Bereich
- A: Schnittebene
- B: Schnittebene

## Patentansprüche

1. Werkzeugeinsatz und/oder Werkzeugaufnahmeeinsatz (74a-b, 78a-b), insbesondere Werkzeugablageeinsatz und/oder
Werkzeugaufnahmeablageeinsatz, mit zumindest einem Grundkörper (10a-b), aufweisend genau einen, zumindest teilweise als eine Vertiefung (12a-b) in dem Grundkörper (10a-b) ausgebildeten, Aufnahmebereich (14a-b) zu einer zumindest teilweisen Aufnahme zumindest eines Werkzeugs und/oder zumindest einer Werkzeugaufnahme (16a-b), mit zumindest einem, zumindest teilweise innerhalb des Aufnahmebereichs (14a-b) angeordneten und in den Aufnahmebereich (14a-b) hineinragenden Kontaktelement (18a-b, 20a-b, 22a-b) zu einer Ausbildung einer kontaktierenden Halterung des Werkzeugs und/oder der Werkzeugaufnahme (16a-b), und mit komplementär zueinander ausgebildeten, parallel zu einer Aufnahmerichtung (24a-b) des Aufnahmebereichs (14a-b) verlaufenden Seitenwänden (26a-b, 28a-b) an zumindest zwei gegenüberliegenden Außenseiten des Grundkörpers (10ab), wobei die Seitenwände (26a-b, 28a-b) Seitenflächen (30a-b, 32a-b) aufweisen, welche Kontaktflächen ausbilden,
**dadurch gekennzeichnet, dass** die die Kontaktflächen ausbildenden Seitenflächen (30a-b, 32a-b) einer Seitenwand (26a-b) der komplementär zueinander ausgebildeten Seitenwände (26a-b, 28a-b) auf wenigstens zwei voneinander wesentlich verschiedenen und zumindest im Wesentlichen parallel zueinander verlaufenden Ebenen verlaufen, wobei die Seitenwände (26a-b, 28a-b) mit den die Kontaktflächen ausbildenden Seitenflächen (30a-b, 32a-b) dazu vorgesehen sind, zumindest teilweise mit Seitenwänden (26a-b, 28a-b) weiterer der Werkzeugeinsätze und/oder Werkzeugaufnahmeeinsätze (74a-b, 78a-b), welche ebenfalls die Kontaktflächen ausbildende Seitenflächen (30a-b, 32a-b) aufweisen, derart ineinanderzugreifen, dass bei dem Ineinandergreifen der Seitenwände (26a-b, 28a-b) von zweien der Werkzeugeinsätze und/oder Werkzeugaufnahmeeinsätze (74a-b, 78a-b) gedachte, kleinstmögliche geometrische Quader, welche jeweils einen Werkzeugeinsatz und/oder Werkzeugaufnahmeeinsatz (74a-b, 78a-b) der zwei Werkzeugeinsätze und/oder Werkzeugaufnahmeeinsätze (74a-b, 78a-b) gerade noch vollständig umschließen, zumindest teilweise überlappen, wobei der Aufnahmebereich (14a-b) genau eine Aufnahmeöffnung (66a-b) aufweist, wobei ein Zentrum (104a-b) der Aufnahmeöffnung (66a-b) und/oder des Aufnahmebereichs (14a-b) seitlich versetzt im Grundkörper (10a-b) angeordnet ist und wobei der Werkzeugeinsatz und/oder
Werkzeugaufnahmeeinsatz (74a-b, 78a-b) derart geformt ist, dass bei einer Aneinanderreihung von jeweils in einer Horizontalebene um 180° gedrehten Werkzeugeinsätzen und/oder Werkzeugaufnahmeeinsätzen (74a-b, 78a-b) die Aufnahmeöffnungen (66a-b) der in Reihe angeordneten Werkzeugeinsätze und/oder Werkzeugaufnahmeeinsätze (74a-b, 78a-b) auf zwei überlappungsfreien parallelen Geraden in zueinander versetzten Reihen (98a-b, 100a-b) liegen.

2. Werkzeugeinsatz und/oder Werkzeugaufnahmeeinsatz (74a-b, 78a-b) nach Anspruch 1, **dadurch gekennzeichnet, dass** der Grundkörper (10ab) in einer Draufsicht zumindest im Wesentlichen eine Schaufelform (34ab), eine Spachtelform (36a-b) und/oder eine Form eines oben geschlossenen Ypsilons (38a-b) ausbildet.

3. Werkzeugeinsatz und/oder Werkzeugaufnahmeeinsatz (74a-b, 78a-b) nach Anspruch 1 oder 2, **dadurch gekennzeichnet, dass** das Kontaktelement (18a-c, 20a-c, 22a-c) eine Außenform aufweist, welche zumindest in eine Richtung senkrecht zu einer Aufnahmerichtung (24a-c) des Aufnahmebereichs (14a-c) einen zumindest im Wesentlichen stetig zunehmenden und/oder stetig abnehmenden Verlauf aufweist und/oder dass sich das Kontaktelement (18a-b, 20a-b, 22a-b) in einem aufnahmebereiten Zustand des Werkzeugeinsatzes und/oder des Werkzeugaufnahmeeinsatzes in ein Inneres (46a-b) des Aufnahmebereichs (14a-b) erstreckt.

4. Werkzeugeinsatz und/oder Werkzeugaufnahmeeinsatz (74a-b, 78a-b) nach einem der vorhergehenden Ansprüche, **dadurch gekennzeichnet, dass** zumindest ein Teil des zumindest einen Kontaktelements (18a-c, 20a-c, 22a-c) zumindest teilweise eine zumindest im Wesentlichen keilförmige Außenform (48a-c) aufweist und/oder dass das Kontaktelement (18a-c, 20a-c, 22a-c) in einem aufnahmebereiten Zustand des Werkzeugeinsatzes und/oder des Werkzeugaufnahmeeinsatzes keilförmig in Richtung eines Inneren (46a-c) des Aufnahmebereichs (14a-c) zuläuft.

5. Werkzeugeinsatz und/oder Werkzeugaufnahmeeinsatz (74a-b, 78a-b) nach einem der vorhergehenden Ansprüche, **dadurch gekennzeichnet, dass** eine zu einer Kontaktierung zumindest eines Teils eines in den Aufnahmebereich (14a-c) eingesetzten Werkzeugs und/oder einer in den Aufnahmebereich (14a-c) eingesetzten Werkzeugaufnahme (16a-c) vorgesehene Kontaktoberfläche (56a-c, 58a-c, 60a-c) des Kontaktelements (18a-c, 20a-c, 22a-c) in zumindest einem Teilbereich des Kontaktelements (18a-c, 20a-c, 22a-c) zumindest eine Tangentialebene (108a-c) aufweist, welche zumindest eine Teilkomponente (110a-c) aufweist, die in einer Montagestellung des Werkzeugeinsatzes und/oder des Werkzeugaufnahmeeinsatzes parallel zur Horizontalen (62a-c) verläuft.

6. Werkzeugeinsatz und/oder Werkzeugaufnahmeeinsatz (74a-b, 78a-b) nach einem der vorhergehenden Ansprüche, **dadurch gekennzeichnet, dass** eine zu einer Kontaktierung zumindest eines Teils eines in den Aufnahmebereich (14a-c) eingesetzten Werkzeugs und/oder einer in den Aufnahmebereich (14a-c) eingesetzten Werkzeugaufnahme (16a-c) vorgesehene Kontaktoberfläche (56a-c, 58a-c, 60a-c) des Kontaktelements (18a-c, 20a-c, 22a-c) relativ zu einer Extrusion (64a-c) einer den Aufnahmebereich (14a-c) begrenzenden Aufnahmeöffnung (66a-c) des Aufnahmebereichs (14a-c) in eine Aufnahmerichtung (24a-c) des Aufnahmebereichs (14a-c) und/oder relativ zu einer Verlängerung (68a-c) des Aufnahmebereichs (14a-c) in die Aufnahmerichtung (24a-c) gewinkelt angeordnet ist.

7. Werkzeugeinsatz und/oder Werkzeugaufnahmeeinsatz (74a-b, 78a-b) nach Anspruch 6, **dadurch gekennzeichnet, dass** ein Winkel (70a-c), den die Kontaktoberfläche (56a-c, 58a-c, 60a-c) und die Extrusion (64a-c) der Aufnahmeöffnung (66a-c) einschließen, und ein weiterer Winkel (72a-c), den die Kontaktoberfläche (56a-c, 58a-c, 60a-c) und die Verlängerung (68a-c) des Aufnahmebereichs (14a-c) einschließen, unterschiedlich groß sind.

8. Werkzeugeinsatz und/oder Werkzeugaufnahmeeinsatz (74a-b, 78a-b) nach einem der vorhergehenden Ansprüche, **dadurch gekennzeichnet, dass** die Kontaktoberfläche (56b, 58b, 60b) zumindest teilweise gebogen ausgebildet ist.

9. Werkzeugeinsatz und/oder Werkzeugaufnahmeeinsatz (74a-b, 78a-b) nach Anspruch 8, **dadurch gekennzeichnet, dass** die Kontaktoberfläche (56b, 58b, 60b) zumindest im Wesentlichen in einer Richtung senkrecht zu einer Aufnahmerichtung (24b) des Aufnahmebereichs (14b) gebogen ist.

10. Werkzeugeinsatz und/oder Werkzeugaufnahmeeinsatz (74a-b, 78a-b) nach Anspruch 8 oder 9, **dadurch gekennzeichnet, dass** die Kontaktoberfläche (56b, 58b, 60b) zumindest im Wesentlichen in einer Richtung parallel zu einer Aufnahmerichtung (24b) des Aufnahmebereichs (14b) gebogen ist.

11. Werkzeugeinsatz und/oder Werkzeugaufnahmeeinsatz (74a-b, 78a-b) nach einem der vorhergehenden Ansprüche, **dadurch gekennzeichnet, dass** zumindest ein Kontaktelement (18a-c, 20a-c, 22a-c) zumindest teilweise flexibel deformierbar ist und/oder zumindest eine zumindest teilweise flexibel deformierbare Kontaktoberfläche (56a-c, 58a-c, 60a-c) aufweist.

12. System (76a-b) von Werkzeugeinsätzen und/oder
Werkzeugaufnahmeeinsätzen (74a-b, 78a-b), **gekennzeichnet durch** zumindest zwei Werkzeugeinsätze und/oder Werkzeugaufnahmeeinsätze (74a-b, 78a-b) nach einem der vorhergehenden Ansprüche, wobei die Werkzeugeinsätze und/oder
Werkzeugaufnahmeeinsätze (74a-b, 78a-b) so zueinander angeordnet sind, dass Seitenwände (26a-b, 28a-b) der zumindest zwei Werkzeugeinsätze und/oder Werkzeugaufnahmeeinsätze (74a-b, 78a-b) zumindest teilweise ineinandergreifen.

13. Werkzeug- und/oder Werkzeugaufnahmelagersystem 96a-c), **gekennzeichnet durch** zumindest einen Werkzeugeinsatz und/oder Werkzeugaufnahmeeinsatz (74a-c, 78a-c) nach einem der Ansprüche 1 bis 11 und/oder ein System (76a-b) von Werkzeugeinsätzen und/oder
Werkzeugaufnahmeeinsätzen nach Anspruch 12 und eine Werkzeuglagereinheit (92a-c), welche zumindest eine Montageschiene (94a-c) zur Montage zumindest eines Werkzeugeinsatzes und/oder eines Werkzeugaufnahmeeinsatzes (74a-c, 78a-c) aufweist, wobei die Werkzeugeinsätze und/oder
Werkzeugaufnahmeeinsätze (74a-b, 78a-b) in der Montageschiene (94ab) so positioniert sind, dass Aufnahmeöffnungen (66a-b) der Aufnahmebereiche (14a-b) der Werkzeugeinsätze und/oder
Werkzeugaufnahmeeinsätze (74a-b, 78a-b) in zwei zumindest im Wesentlichen parallelen, seitlich zueinander versetzten Reihen (98a-b, 100a-b) angeordnet sind.

## Claims

1. Tool insert and/or tool holder insert (74a-b, 78a-b), in particular tool storage insert and/or tool holder storage insert,
having at least one base body (10a-b) comprising precisely one receiving region (14a-b), embodied at least partially as a hollow (12a-b) in the base body (10a-b), for at least partial accommodation of at least one tool and/or at least one tool holder (16a-b),
having at least one contact element (18a-b, 20a-b, 22a-b), which is arranged at least partially in the receiving region (14a-b) and projects into the receiving region (14a-b), for the purpose of forming a contacting mounting of the tool and/or of the tool holder (16a-b), and
having on at least two opposite-situated outer faces of the base body (10a-b) side walls (26a-b, 28a-b) which are realized so as to complement each other and extend parallel to a receiving direction (24a-b) of the receiving region (14a-b), the side walls (26a-b, 28a-b) comprising side surfaces (30a-b, 32a-b) which form contact faces,
**characterised in that** the side surfaces (30a-b, 32a-b) of one side wall (26a-b) of the complementarily-realized side walls (26a-b, 28a-b), which form the contact faces, extend on at least two substantially different planes extending at least substantially parallel to each other,
the side walls (26a-b) with the side surfaces (30a-b, 32a-b) which form the contact faces being configured to at least partially engage with side walls (26a-b, 28a-b) of further ones of the tool inserts and/or tool holder inserts (74a-b, 78a-b), also having side surfaces (30a-b, 32a-b) which form the contact faces, in such a way that - when the side walls (26a-b, 28a-b) of two of the tool inserts and/or tool holder inserts (74a-b, 78a-b) engage - imaginary smallest possible geometric cuboids, which in each case just still completely enclose one tool insert and/or tool holder insert (74a-b, 78a-b) of the two tool inserts and/or tool holder inserts (74a-b, 78a-b), at least partially overlap,
the receiving region (14a-b) having precisely one receiving opening (66a-b), wherein a centre (104a-b) of the receiving opening (66a-b) and/or of the receiving region (14a-b) is arranged in the base body (10a-b) in a sidewise offset, and
the tool insert and/or tool holder insert (74a-b, 78a-b) being shaped in such a way that - when tool inserts and/or tool holder inserts (74a-b, 78a-b) are lined up, which are in each case rotated by 180° in a horizontal plane - the receiving openings (66a-b) of the lined-up tool inserts and/or tool holder inserts (74a-b, 78a-b) are situated on two overlap-free parallel straight lines in rows (98a-b, 100a-b) which are offset from each other.

2. Tool insert and/or tool holder insert (74a-b, 78a-b) according to claim 1,
**characterised in that** in a plan view the base body (10a-b) forms at least substantially a shovel shape (34a-b), a spattle shape (36a-b) and/or a shape of an Y closed at the top (38a-b).

3. Tool insert and/or tool holder insert (74a-b, 78a-b) according to claim 1 or 2,
**characterised in that** the contact element (18a-c, 20a-c, 22a-c) has an outer shape which, at least in a direction perpendicular to a receiving direction (24a-c) of the receiving region (14a-b), has an at least substantially continuously increasing and/or continuously decreasing contour, and/or
that, in a state of the tool insert and/or the tool holder insert ready for receiving, the contact element (18a-b, 20a-b, 22a-b) extends into an interior (46a-b) of the receiving region (14a-b).

4. Tool insert and/or tool holder insert (74a-b, 78a-b) according to one of the preceding claims,
**characterised in that** at least a portion of the at least one contact element (18a-c, 20a-c, 22a-c) at least partially has an at least substantially wedge-shaped outer shape (48a-c), and/or
that, in a state of the tool insert and/or the tool holder insert ready for receiving, the contact element (18a-c, 20a-c, 22a-c) tapers in a wedge shape towards an interior (46a-c) of the receiving region (14a-c).

5. Tool insert and/or tool holder insert (74a-b, 78a-b) according to one of the preceding claims,
**characterised in that** a contact surface (56a-c, 58a-c, 60a-c) of the contact element (18a-c, 20a-c, 22a-c), which is configured for contacting at least a portion of a tool inserted in the receiving region (14a-c) and/or of a tool holder (16a-c) inserted in the receiving region (14a-c), has at least one tangential plane (108a-c) in at least one subregion of the contact element (18a-c, 20a-c, 22a-c), said tangential plane (108a-c) having at least one sub-component (110a-c) that extends parallel to the horizontal (62a-c) in a mounting position of the tool insert and/or the tool holder insert.

6. Tool insert and/or tool holder insert (74a-b, 78a-b) according to one of the preceding claims,
**characterised in that** a contact surface (56a-c, 58a-c, 60a-c) of the contact element (18a-c, 20a-c, 22a-c), which is configured for contacting at least a portion of a tool inserted in the receiving region (14a-c) and/or of a tool holder (16a-c) inserted in the receiving region (14a-c), is arranged at an angle relative to an extrusion (64a-c) of a receiving opening (66a-c) of the receiving region (14a-c) that delimits the receiving region (14a-c) in a receiving direction (24a-c) of the receiving region (14a-c) and/or relative to a prolongation (68a-c) of the receiving region (14a-c) in the receiving direction (24a-c).

7. Tool insert and/or tool holder insert (74a-b, 78a-b) according to claim 6,
**characterised in that** an angle (70a-c) included by the contact surface (56a-c, 58a-c, 60a-c) and the extrusion (64a-c) and a further angle (72a-c) included by the contact surface (56a-c, 58a-c, 60a-c) and the prolongation (68a-c) of the receiving region (14a-c) differ in size.

8. Tool insert and/or tool holder insert (74a-b, 78a-b) according to one of the preceding claims,
**characterised in that** the contact surface (56b, 58b, 60b) is realized so as to be at least partially bent.

9. Tool insert and/or tool holder insert (74a-b, 78a-b) according to claim 8,
**characterised in that** the contact surface (56b, 58b, 60b) is bent at least substantially in a direction perpendicular to a receiving direction (24b) of the receiving region (14b).

10. Tool insert and/or tool holder insert (74a-b, 78a-b) according to claim 8 or 9,
**characterised in that** the contact surface (56b, 58b, 60b) is bent at least substantially in a direction parallel to a receiving direction (24b) of the receiving region (14b).

11. Tool insert and/or tool holder insert (74a-b, 78a-b) according to one of the preceding claims,
**characterised in that** at least one contact element (18a-c, 20a-c, 22a-c) is at least partially flexibly deformable and/or at least has an at least partially flexibly deformable contact surface (56a-c, 58a-c, 60a-c).

12. System (76a-b) of tool inserts and/or tool holder inserts (74a-b, 78a-b),
**characterised by** at least two tool inserts and/or tool holder inserts (74a-b, 78a-b) according to one of the preceding claims,
the tool inserts and/or tool holder inserts (74a-b, 78a-b) being arranged with respect to each other in such a way that side walls (26a-b, 28a-b) of the at least two tool inserts and/or tool holder inserts (74a-b, 78a-b) at least partially engage with each other.

13. Tool and/or tool holder storage system (96a-c),
**characterised by** at least one tool insert and/or tool holder insert (74a-c, 78a-c) according to one of claims 1 to 11 and/or a system (76a-b) of tool inserts and/or tool holder inserts (74a-b, 78a-b) according to claim 12, and a tool storage unit (92a-c) comprising at least one mounting rail (94a-c) for a mounting of at least one tool insert and/or tool holder insert (74a-c, 78a-c),
the tool inserts and/or tool holder inserts (74a-b, 78a-b) being positioned in the mounting rail (94a-b) in such a way that receiving openings (66a-b) of the receiving regions (14a-b) of the tool inserts and/or tool holder inserts (74a-b, 78a-b) are arranged in two at least substantially parallel rows (98a-b, 100a-b) which are offset from each other sidewise.

## Revendications

1. Insert d'outil et/ou insert de porte-outil (74a-b, 78a-b), en particulier insert-dépôt d'outil et/ou insert-dépôt de porte-outil,
avec au moins un corps de base (10a-b) ayant précisément une zone de logement (14a-b), formée au moins partiellement comme enfoncement (12a-b) dans le corps de base (10a-b), pour au moins partiellement recevoir au moins un outlil et/ou au moins un porte-outil (16a-b),
avec au moins un élément de contact (18a-b, 20a-b, 22a-b), disposé au moins partiellement dans la zone de logement (14a-b) et projetant dans la zone de logement (14a-b), pour former un support-contactant de l'outil et/ou du porte-outil (16a-b),
et avec des parois latérales (26a-b, 28a-b), formées complémentairement l'une à l'autre et s'étendant en parallèle à une direction de logement (24a-b) de la zone de logement (14a-b), sur au moins deux faces extérieures opposées du corps de base (10a-b), lesdites parois latérales (26a-b, 28a-b) ayant des surfaces latérales (30a-b, 32a-b) qui forment des surfaces de contact,
**caractérisé en ce que** les surfaces latérales (30a-b, 32a-b) d'une paroi latérale (26a-b) des parois latérales (26a-b, 28a-b) formées complémentairement l'une à l'autre, qui forment les surfaces de contact, s'étendent sur au moins deux plans sensiblement différents l'un de l'autre et s'étendant au moins sensiblement parallèlement l'un à l'autre,
les parois latérales (26a-b, 28a-b) avec les surfaces latérales (30a-b, 32a-b) formant les surfaces de contact étant prévues pour s'engrener au moins partiellement avec des parois latérales (26a-b, 28a-b) des autres inserts d'outil et/ou inserts de porte-outil (74a-b, 78a-b), qui aussi comprennent des surfaces latérales (30a-b, 32a-b) formant les surfaces de contact, d'une telle manière que - dans l'engrenage des parois latérales (26a-b, 28a-b) de deux des inserts d'outil et/ou inserts de porte-outil (74a-b, 78a-b) - les parallélépipèdes rectangles géométriques imaginaires les plus petits possibles, chacun desquels tout juste entoure complètement un insert d'outil et/ou insert de porte-outil (74a-b, 78a-b) des deux inserts d'outil et/ou inserts de porte-outil (74a-b, 78a-b), se chevauchent au moins partiellement,
où la zone de logement (14a-b) comprend précisément une ouverture-logement (66a-b),
où un centre (104a-b) de l'ouverture-logement (66a-b) et/ou de la zone de logement (14a-b) est disposé dans le corps de base (10a-b) en décalage latéral et où l'insert d'outil et/ou l'insert de porte-outil (74a-b, 78a-b) est formé d'une telle manière que - dans un alignement des inserts d'outil et/ou inserts de porte-outil (74a-b, 78a-b) qui sont respectivement tournés par 180° dans un plan horizontal - les ouvertures-logement (66a-b) des inserts d'outil et/ou inserts de porte-outil (74a-b, 78a-b) alignés soient situées sur deux lignes droites parallèles sans chevauchement, en alignements (98a-b, 100a-b) décalés l'un par rapport à l'autre.

2. Insert d'outil et/ou insert de porte-outil (74a-b, 78a-b) selon la revendication 1, **caractérisé en ce que** vu en plan, le corps de base (10a-b) forme au moins sensiblement une forme de pelle (34a-b), une forme de couteau à enduire (36a-b) et/ou une forme d'i grec fermé en haut (38a-b).

3. Insert d'outil et/ou insert de porte-outil (74a-b, 78a-b) selon la revendication 1 ou 2, **caractérisé en ce que** l'élément de contact (18a-c, 20a-c, 22a-c) présente une forme extérieure ayant, au moins dans une direction perpendiculaire à une direction de logement (24a-c) de la zone de logement (14a-c), un contour au moins sensiblement croissant continûment et/ou diminuant continûment, et/ou
qu'en état de l'insert d'outil et/ou l'insert de porte-outil prêt pour un logement, l'élément de contact (18a-b, 20a-b, 22a-b) s'étend dans un intérieur (46a-b) de la zone de logement (14a-b).

4. Insert d'outil et/ou insert de porte-outil (74a-b, 78a-b) selon l'une des revendications précédentes,
**caractérisé en ce qu'**au moins une partie de l'au moins un élément de contact (18a-c, 20a-c, 22a-c) présente au moins partiellement une forme extérieure (48a-c) au moins sensiblement en forme de coin, et/ou
qu'en état de l'insert d'outil et/ou l'insert de porte-outil prêt pour un logement, l'élément de contact (18a-c, 20a-c, 22a-c) rétrécit en forme de coin vers un intérieur (46a-c) de la zone de logement (14a-c).

5. Insert d'outil et/ou insert de porte-outil (74a-b, 78a-b) selon l'une des revendications précédentes,
**caractérisé en ce qu'**une surface de contact (56a-c, 58a-c, 60a-c) de l'élément de contact (18a-c, 20a-c, 22a-c), prévue pour contacter au moins une partie d'un outil inséré dans la zone de logement (14a-c) et/ou d'un porte-outil (16a-c) inséré dans la zone de logement (14a-c), présente dans au moins une sous-partie de l'élément de contact (18a-c, 20a-c, 22a-c) au moins un plan tangent (108a-c) ayant au moins un sous-composant (110a-c) qui s'étend parallèlement à l'horizontale (62a-c) dans une position de montage de l'insert d'outil et/ou l'insert de porte-outil.

6. Insert d'outil et/ou insert de porte-outil (74a-b, 78a-b) selon l'une des revendications précédentes,
**caractérisé en ce qu'**une surface de contact (56a-c, 58a-c, 60a-c) de l'élément de contact (18a-c, 20a-c, 22a-c), prévue pour contacter au moins une partie d'un outil inséré dans la zone de logement (14a-c) et/ou d'un porte-outil (16a-c) inséré dans la zone de logement (14a-c), est disposée en angle
par rapport à une extrusion (64a-c) d'une ouverture-logement (66a-c) de la zone de logement (14a-c) qui délimite la zone de logement (14a-c) dans une direction de logement (24a-c) de la zone de logement (14a-c),
et/ou par rapport à un prolongement (68a-c) de la zone de logement (14a-c) dans la direction de logement (24a-c).

7. Insert d'outil et/ou insert de porte-outil (74a-b, 78a-b) selon la revendication 6, **caractérisé en ce qu'**un angle (70a-c) inclus par la surface de contact (56a-c, 58a-c, 60a-c) et l'extrusion (64a-c) de l'ouverture-logement (66a-c) et un autre angle (72a-c) inclus par la surface de contact (56a-c, 58a-c, 60a-c) et le prolongement (68a-c) de la zone de logement (14a-c) sont de tailles différentes.

8. Insert d'outil et/ou insert de porte-outil (74a-b, 78a-b) selon l'une des revendications précédentes,
**caractérisé en ce que** la surface de contact (56b, 58b, 60b) est formée au moins partiellement en pliage.

9. Insert d'outil et/ou insert de porte-outil (74a-b, 78a-b) selon la revendication 8, **caractérisé en ce que** la surface de contact (56b, 58b, 60b) est pliée au moins sensiblement dans une direction perpendiculaire à une direction de logement (24b) de la zone de logement (14b).

10. Insert d'outil et/ou insert de porte-outil (74a-b, 78a-b) selon la revendication 8 ou 9, **caractérisé en ce que** la surface de contact (56b, 58b, 60b) est pliée au moins sensiblement dans une direction parallèle à une direction de logement (24b) de la zone de logement (14b).

11. Insert d'outil et/ou insert de porte-outil (74a-b, 78a-b) selon l'une des revendications précédentes,
**caractérisé en ce qu'**au moins un élément de contact (18a-c, 20a-c, 22a-c) est déformable au moins partiellement flexiblement, et/ou
comprend au moins une surface de contact (56a-c, 58a-c, 60a-c) qui est déformable au moins partiellement flexiblement.

12. Système (76a-b) des inserts d'outil et/ou inserts de porte-outil (74a-b, 78a-b),
**cactérisé par** au moins deux inserts d'outil et/ou inserts de porte-outil (74a-b, 78a-b) selon l'une des revendications précédentes,
les inserts d'outil et/ou inserts de porte-outil (74a-b, 78a-b) étant disposés les ns par rapport aux autres d'une telle manière que des parois latérales (26a-b, 28a-b) des au moins deux inserts d'outil et/ou inserts de porte-outil (74a-b, 78a-b) s'engrènent l'une avec l'autre au moins partiellement.

13. Système de stockage d'outil et/ou de porte-outil (96a-c),
**caractérisé par** au moins un insert d'outil et/ou insert de porte-outil (74a-c, 78a-c) selon l'une des revendications 1 à 11 et/ou
un système (76a-b) des inserts d'outil et/ou inserts de porte-outil (74a-b, 78a-b) selon la revendication 12 et une unité de stockage d'outil (92a-c) comprenant au moins un rail de montage (94a-c) pour le montage d'au moins un insert d'outil et/ou insert de porte-outil (74a-c, 78a-c),
les inserts d'outil et/ou inserts de porte-outil (74a-b, 78a-b) étant positionnés dans le rail de montage (94a-b) d'une telle manière que des ouvertures-logement (66a-b) des zones de logement (14a-b) des inserts d'outil et/ou inserts de porte-outil (74a-b, 78a-b) soient disposées en alignements (98a-b, 100a-b) au moins sensiblement parallèles qui sont latéralement décalés l'un par rapport à l'autre.
